Europäisches Patentamt

European Patent Office

Office européen des brevets

(19)

(11) **EP 0 566 202 B1**

(12) **FASCICULE DE BREVET EUROPEEN**

(45) Date de publication et mention
de la délivrance du brevet:
**09.04.1997 Bulletin 1997/15**

(51) Int Cl.⁶: **H04N 7/30**

(21) Numéro de dépôt: **93201064.8**

(22) Date de dépôt: **13.04.1993**

(54) **Procédé et dispositif de filtrage spatial d'images numériques décodées par transformation de bloc**

Verfahren und Vorrichtung für die räumliche Filterung von blocktransformationsdekodierten digitalen Bildern

Method and device for spatial filtering of block transform decoded digital images

(84) Etats contractants désignés:
**BE DE DK ES GB IT LU NL PT SE**

(30) Priorité: **17.04.1992 FR 9204816**

(43) Date de publication de la demande:
**20.10.1993 Bulletin 1993/42**

(73) Titulaire: **SAT (Société Anonyme de Télécommunications)**
**75116 Paris (FR)**

(72) Inventeurs:
• **Devimeux, Daniel**
**F-22700 Perros-Guirec (FR)**
• **Jolivet, Jean-Claude**
**F-22300 St-Michel en Greve (FR)**

(74) Mandataire: **Cabinet Martinet & Lapoux**
**BP 405**
**78055 Saint Quentin en Yvelines Cédex (FR)**

(56) Documents cités:
**FR-A- 2 661 063**          **US-A- 4 941 043**

## Description

La présente invention concerne le filtrage d'images numériques animées obtenues après codage et décodage par transformation de blocs de pixel respectivement dans un terminal transmetteur et un terminal récepteur, ces opérations de codage et de décodage ayant pour objectif de réduire le débit d'informations dans une ligne de transmission reliant les deux terminaux.

Les études actuelles des réseaux de télécommunications sont orientées notamment vers la transmission d'images entre abonnés. Pour cela, compte-tenu de l'infrastruture des réseaux existants, il est nécessaire d'utiliser des moyens de transmission limités en largeur de bande de fréquence. A titre indicatif, une image animée de télévision nécéssite un débit numérique de l'ordre de la centaine de Mbit/s, tandis qu'un accès de base au Réseau Numérique à Intégration de Services (RNIS) offre deux canaux au débit de 64 kbit/s, l'un étant destiné à la transmission du son et l'autre, pour de telles applications, à la transmission des images. Pour un tel faible débit de transmission pouvant être compris typiquement entre 64 et 1920 kbit/s, des dispositifs de codage et de décodage ont été prévus dans les transmetteur et récepteur afin de comprimer l'image à transmettre, et plus précisément limiter l'information à transmettre dans la ligne de transmission tout en restituant correctement l'image animée par le récepteur. Trois techniques principales ont été préconisées pour répondre à ces exigences:

a) le codage par prédiction : Il consiste en la transmission d'une erreur de prédiction par le transmetteur vers le récepteur, à ajouter à la valeur prédite du point d'image produite dans le récepteur, les algorithmes de prédiction étant identiques au niveau des transmetteur et récepteur;

b) le codage par transformation : Il consiste à représenter l'image dans un espace différent du plan d'image, afin de séparer plus aisément les informations redondantes et pertinentes de l'image et ne transmettre que ces dernières; et

c) le codage par approximation : il consiste à déduire, à partir d'une partie de l'image qui est transmise, l'autre partie de l'image.

Ces trois méthodes sont combinables et font appel séparement à trois opérations distinctes qui sont la transformation, la quantification et le codage.

Les organismes internationaux de normalisation, tels que CIE, CCITT et ISO, décidaient en 1988 de fonder une norme de codage d'images fixes et animées basée sur la prédiction, la compensation de mouvement et la transformée en cosinus discrète TCD (proche de la transformée de Fourier). La transformée TCD offre des qualités de compression de l'information, une simplicité de mise en oeuvre et une compatibilité avec les standards en cours de développement en image animée (visiophone (marque déposée), télévision numérique...).

La transformation en cosinus discrète consiste à passer d'un repère "visuel" dans lequel chaque point d'image, dit pixel, représente un niveau de luminosité par exemple variant de 0 à 255, à un repère "transformé" de même dimension. La complexité de réalisation de tels opérateurs étant fonction de la dimension $(I.N)(J.N)$ de l'image à traiter, la transformation s'applique à une pluralité $(I.J)$ de blocs carrés de pixel, de dimension $N^2$ de l'image numérisée, N, I et J étant des entiers, et $(I.N)$ et $(J.N)$ dénotant le nombre de lignes de pixels et le nombre de colonnes de pixels dans une image. De plus, la transformée en cosinus discrète ayant pour fonction d'opérer dans un espace bidimensionnel où les coefficients sont décorrélés, un niveau maximum de décorrélation entre pixels du plan image et "pixels" du plan transformé est obtenu pour déterminer des blocs d'image dans lesquels les pixels ont un haut niveau de corrélation, ce qui intuitivement correspond effectivement à des petites zones d'images ayant sensiblement les mêmes caractéristiques en luminosité, couleur, etc. Typiquement, les valeurs de N sont égales à 8, 16 ou 32.

Ce découpage en blocs de l'image numérisée conduit, au niveau des frontières séparant ces blocs, à des effets parasites se traduisant par un aspect de mosaïque dans l'image reconstituée par le terminal récepteur.

Ces effets parasites donnent une apparence de structure d'image par bloc, et sont engendrés par

- des discontinuités de luminosité, ou effets des bords, aux frontières des blocs. Ce phénomène est dû au fait que chaque bloc est virtuellement traduit lors de la transformation en une séquence infinie et périodique (paire) pour obtenir un spectre périodique, et donc des coefficients de transformée en nombre fini; et
- un bruit inter-blocs engendré par des erreurs de quantification d'un bloc donné à un bloc adjacent, des quantifications intervenant sur les coefficients de la transformée.

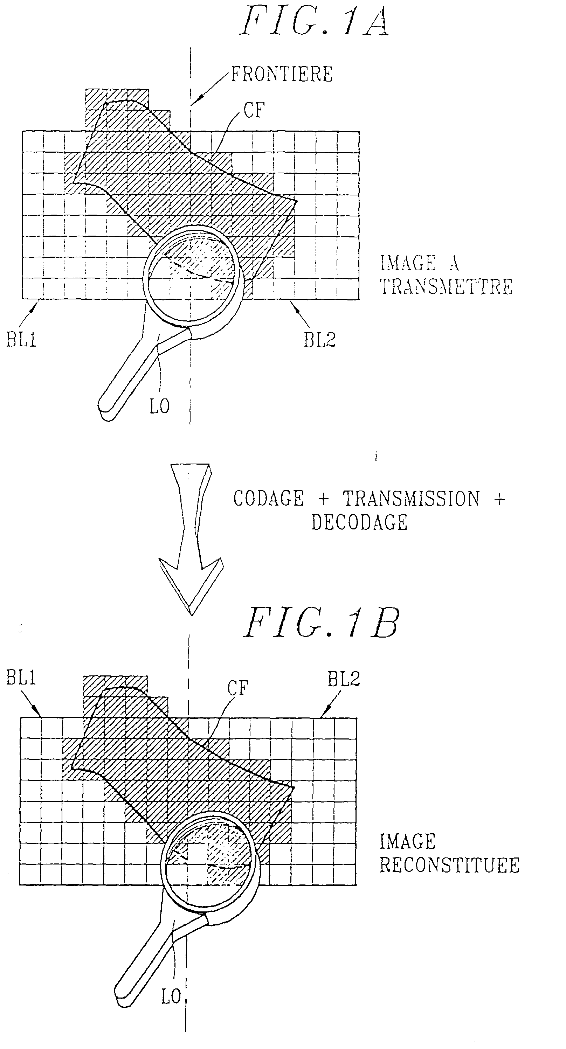

A titre purement explicatif, les figures 1A et 1B représentent deux blocs carrés, BL1 et BL2, consécutifs dans une image et ayant chacun $N^2 = 64$ pixels, transmis par un transmetteur et reconstitués par un récepteur. L'image est supposée être en noir et blanc. Une courbe fermée CF en trait foncé montre l'apparence, perçue par l'oeil, du contour d'un ensemble de pixels noirs dans les deux blocs. Une loupe LO montre, comparativement à la figure 1A, que dans la figure 1B, une rupture de continuité de la courbe est induite par ces effets parasites. On concevra intuitivement l'effet produit au niveau de l'ensemble de l'image.

La demande de brevet FR-A-2 661 063 concerne un procédé et un dispositif de post-filtrage d'une image numérique obtenue après codage et décodage par transformation en cosinus discrète. Pour un pixel donné de l'image numérique, la valeur absolue de la différence entre les valeurs de luminance et/ou chrominance du pixel donné et d'un pixel voisin est calculée. Le résultat de cette différence est comparé à une incertitude de codage préalablement déterminée afin de corriger la valeur de luminance et/ou chrominance du pixel.

La présente invention vise à atténuer, voire à supprimer, les effets parasites dans une image numérique, animée ou bien fixe, après que celle-ci ait été codée et décodée par transformation de blocs et avant que celleci soit visualisée par exemple dans un moniteur de télévision.

A cette fin, un procédé de filtrage d'une image numérique obtenue après codage et décodage par transformation et quantification de blocs de pixels de dimension N x N,

chacun de blocs décodés dans l'image étant constitué de N segments parallèles de pixels ayant des niveaux de luminosité respectifs, et étant séparé, en ligne et en colonne, de blocs adjacents par des frontières respectives,

est caractérisé par les étapes suivantes pour chaque demi-segment desdits N segment d'un bloc donné séparé par l'une respectives frontières d'un demi-segment colinéaire correspondant dans l'un des blocs adjacents :

- détection de discontinuité en niveau de luminosité par rapport au pixel dudit chaque demi-segment limitrophe à ladite frontière respective lorsque deux gradients discrets de niveau de luminosité dépendant respectivement des niveaux de luminosité des deux pixels adjacents audit pixel limitrophe ont des signes opposés; et

en réponse à la détection de ladite discontinuité en niveau de luminosité par rapport audit pixel limitrophe :
- évaluation d'un écart de discontinuité égal à la valeur absolue de la différence entre le niveau de luminosité du pixel limitrophe et la moyenne arithmétique des niveaux de luminosité des pixels adjacents; et
- correction du niveau de luminosité du pixel limitrophe en un niveau de luminosité corrigé respectivement

par soustraction audit niveau de luminosité du pixel limitrophe d'un facteur de correction de discontinuité dépendant dudit écart de discontinuité et d'un pas de quantification utilisé au codage et décodage par transformation dudit bloc donné, lorsque ledit niveau de luminosité du pixel limitrophe est supérieur à ladite moyenne arithmétique, et par addition dudit facteur de correction de discontinuité audit niveau de luminosité du pixel limitrophe lorsque ledit niveau de luminosité du pixel limitrophe est inférieure à ladite moyenne arithmétique.

Ces premières étapes du procédé contribuent à atténuer les différences de niveaux de luminosité, tels que pics, juste à la frontière entre deux blocs adjacents.

Comme on le verra dans la description ultérieure d'une réalisation préférée, les niveaux de luminosité sont relatifs à l'un des signaux composants vidéo d'une image en couleur, tels que luminance et chrominance. En pratique, le procédé selon l'invention est mis en oeuvre à la fois pour tous les signaux composants vidéo.

De préférence, les premières étapes du procédé sont suivies de secondes étapes améliorant la continuité de l'image de part et d'autre de la frontière de deux blocs adjacents et rémédiant ainsi aux erreurs de quantification entre deux blocs adjacents.

Les secondes étapes pour ledit chaque demi-segment dans ledit bloc donné segment et ledit colinéaire du bloc adjacent séparés par une frontière, consistent en:

- pour chacun des demi-segments, évaluation d'un niveau de luminosité fictif à ladite frontière respectivement,

égal à la somme du niveau corrigé de luminosité en dudit pixel limitrophe dudit chaque demi-segment et de la demi-différence du niveau de luminosité corrigé dudit pixel limitrophe et d'un niveau de luminosité d'un pixel dudit demi-segment qui est adjacent audit pixel limitrophe lorsque le niveau corrigé dudit pixel limitrophe est supérieur au niveau de luminosité dudit pixel adjacent audit pixel limitrophe, et égal à la différence dudit niveau corrigé dudit pixel limitrophe et de ladite demi-différence lorsque ledit niveau corrigé dudit pixel limitrophe dudit segment est inférieur audit niveau dudit pixel adjacent audit pixel limitrophe dudit demi-segment,

- évaluation d'un écart de bloc égal à la différence des deux niveaux de luminosité fictifs évalués pour ledit chaque demi-segment et ledit demi-segment correspondant,
- détermination d'un facteur de correction de bloc en fonction dudit écart de bloc et de pas de quantification utilisés au codage et décodage par transformation desdits bloc donné et bloc adjacent respectivement; et
- correction des niveaux de luminosité des pixels dudit chaque demi-segment et dudit demi-segment correspondant respectivement

par soustraction du facteur de correction de bloc pondéré de coefficients décroissants respectivement en proportion aux éloignements desdits pixels de la frontière entre ledit chaque demi-segment et ledit demi-segment correspondant, lorsque le niveau de luminosité fictif relatif audit chaque demi-segment est supérieur au niveau de luminosité fictif relatif audit demi-segment correspondant, et

par addition du facteur de correction de bloc pondéré par lesdits coefficients lorsque le niveau de luminosité fictif relatif audit chaque demi-segment est inférieur au niveau de luminosité fictif relatif audit demi-segment correspondant.

Le traitement spatial d'une image numérisée décodée selon l'invention peut considérer indifféremment les lignes ou les colonnes d'un bloc comme les segments du bloc.

Le traitement spatial de l'image s'effectue aussi bien en direction horizontale qu'une direction verticale.

Le procédé comprend alors,

préalablement, une translation de chacun des blocs de segments de l'image en un bloc translaté suivant une demi-diagonale dudit bloc, puis une série d'étapes conformes aux étapes précitées et relatives à chacun des deux demi-segments composant chacune des lignes, respectivement colonnes, dudit bloc translaté afin de constituer un premier bloc corrigé, et

une série d'étapes conformes aux étapes précitées et relatives à chacun des deux demi-segments composant chacune des colonnes, respectivement lignes, dudit bloc translaté.

L'invention concerne également un dispositif de filtrage d'image numérisée pour la mise en oeuvre du procédé.

Pour mettre en oeuvre au moins les premières étapes du procédé, un dispositif de filtrage d'une image numérique obtenue après codage et décodage par transformation et quantification de blocs de pixels de dimension N x N,

chacun des blocs décodés dans l'image étant constitué de N segments parallèles de pixels ayant des niveaux de luminosité respectifs et étant séparé, en ligne et en colonne, de blocs adjacents par des frontières respectives,

chaque demi-segment desdits N segments d'un bloc donné étant séparé d'un demi-segment colinéaire correspondant dans l'un des blocs adjacents par l'une respective des frontières,

est caractérisé en ce qu'il comprend :

des moyens d'entrée pour translater les blocs décodés suivant une demi-diagonale des blocs décodés en des blocs translatés, lesdits blocs translatés ayant des axes de symétrie horizontaux et verticaux correspondant à des frontières des blocs décodés afin de produire en série les segments inclus dans chacun des blocs translatés,

des premiers moyens pour évaluer successivement des écarts de discontinuité relatifs aux demi-segments de chacun des segments de chaque bloc translaté, chaque écart de discontinuité étant égal à la valeur absolue de la différence entre le niveau de luminosité du pixel dudit chaque demi-segment limitrophe à la frontière et la moyenne arithmétique des niveaux de luminosité des pixels adjacents audit pixel limitrophe,

des premiers moyens pour déterminer, pour les demi-segments dudit bloc translaté, les signes des écarts de discontinuité et des facteurs de correction de discontinuité, chaque facteur de correction de discontinuité étant déterminé en fonction des écarts de discontinuité et de pas de quantification de blocs décodés, et

des premiers moyens pour corriger les segments dudit bloc translaté en fonction des facteurs et signes déterminés, en des premiers segments corrigés.

Pour mettre également en oeuvre les secondes étapes du procédé, le dispositif comprend

des seconds moyens pour évaluer successivement des écarts de bloc relatifs aux premiers segments corrigés dudit bloc, chaque écart de bloc étant égal à la différence de deux niveaux de luminosité fictifs évalués pour ledit chaque demi-segment et ledit demi-segment colinéaire correspondant séparés par ladite frontière, le niveau de luminosité fictif pour ledit chaque demi-segment étant

égal à la somme du niveau corrigé de luminosité dudit pixel limitrophe dudit chaque demi-segment et de la demi-différence du niveau de luminosité corrigé dudit pixel limitrophe et d'un niveau de luminosité d'un pixel dudit demi-segment qui est adjacent audit pixel limitrophe lorsque le niveau corrigé dudit pixel limitrophe est supérieur au niveau de luminosité dudit pixel adjacent audit pixel limitrophe, et

égal à la différence dudit niveau corrigé dudit pixel limitrophe et de ladite demi-différence lorsque ledit niveau corrigé dudit pixel limitrophe dudit demi-segment est inférieur audit niveau dudit pixel adjacent audit pixel limitrophe dudit demi-segment,

des seconds moyens pour déterminer des facteurs de correction de bloc et les signes des écarts de bloc en fonction des écarts de bloc et desdits pas de quantification pour les premiers segments corrigés, et

des seconds moyens pour corriger les premiers segments corrigés en fonction des facteurs de correction de bloc et des signes des écarts de bloc, en des seconds segments corrigés.

De préférence, de manière à réduire le coût du dispositif du filtrage, les premiers et seconds moyens pour déterminer sont confondus. Le dispositif de filtrage comprend alors des premiers moyens pour multiplexer les écarts de discontinuité et les écarts de blocs en des écarts multiplexés appliqués aux moyens confondus pour déterminer qui transmettent des facteurs de correction de discontinuité et de bloc multiplexés auxdits premiers et seconds moyens pour corriger.

Lorsque le dispositif de filtrage corrige les effets parasites dans une image aussi bien suivant les lignes que suivant les colonnes, celui-ci comprend un second ensemble de seconds moyens pour évaluer, déterminer et corriger relatifs à des seconds segments constitués par des colonnes, respectivement lignes des blocs translatés, qui est analogue à un premier ensemble incluant lesdits premiers moyens relatifs à des premiers segments constitués par des lignes, respectivement colonnes des blocs translatés et qui opère à la suite du premier ensemble.

Pour réduire à nouveau le coût de ce dernier dispositif de filtrage traitant à la fois les lignes et colonnes de blocs d'image, les premiers et seconds moyens pour évaluer des écarts sont confondus, et les premiers et seconds moyens pour déterminer des facteurs de correction sont confondus. Dans ce cas, le dispositif comprend des premiers moyens pour transposer chaque bloc de segments corrigés sortant du premier ensemble, en des blocs transposés, des seconds moyens pour multiplexer les blocs translatés et les blocs transposés en des blocs multiplexés appliqués au second ensemble, et des moyens pour transposer les blocs corrigés produits par le second ensemble.

D'autres caractéristiques et avantages de la présente invention apparaîtront plus clairement à la lecture de la description suivante de plusieurs réalisations préférées de l'invention, en référence aux dessins annexés correspondants dans lesquels :

- les figures 1A et 1B, déjà commentées, montrent respectivement deux blocs d'image transmis et reconstitués pour apprécier l'effet de discontinuité aux frontières de blocs;
- la figure 2 est un bloc-diagramme schématique d'une chaîne de transmission/réception d'images numériques à réduction de débit incluant un dispositif de filtrage spatial selon l'invention;
- la figure 3 est une représentation d'une image de dimension (NI x NJ) pixels mise sous la forme d'une pluralité de blocs de dimension (N x N) pixels;
- la figure 4 est un diagramme de niveau de luminosité pour une ligne, respectivement colonne, dans deux blocs adjacents pour un calcul d'un écart de discontinuité;

- la figure 5 montre deux courbes de facteur de correction de discontinuité en fonction d'écart de discontinuité;
- la figure 6 est un diagramme de niveau de luminosité pour une ligne, respectivement colonne, dans deux blocs adjacents pour un calcul d'un écart de bloc et une correction de cet écart;
- la figure 7 est un schéma partiel d'une image montrant une opération de translation effectuée sur des blocs d'images initiaux;
- la figure 8 montre un bloc translaté; et
- la figure 9 est un bloc-diagramme du dispositif de filtrage spatial selon l'invention.

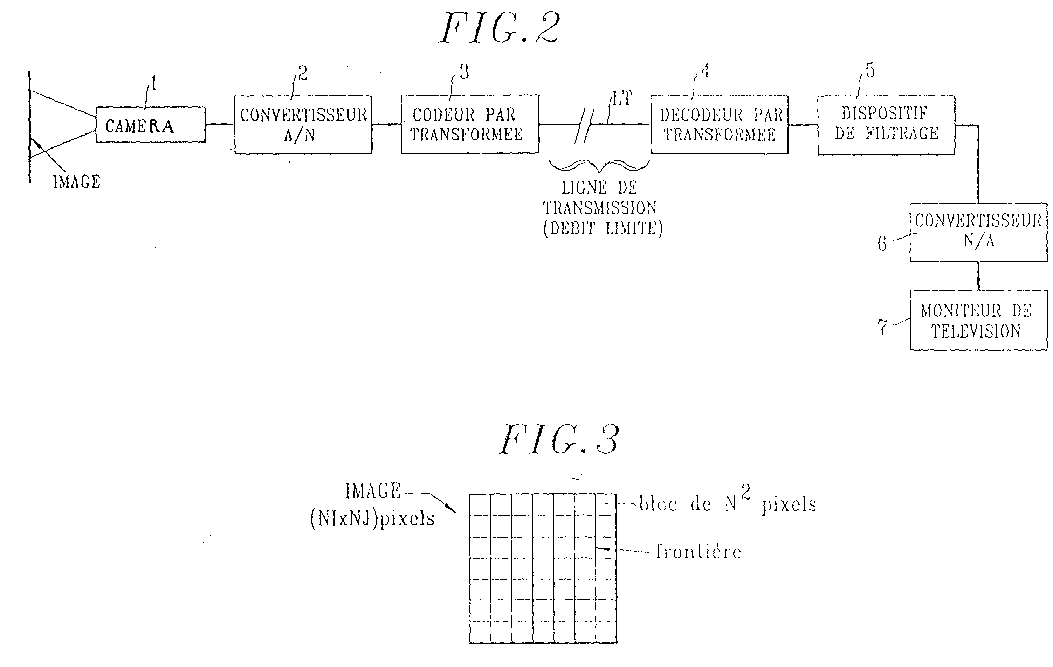

En référence à la figure 2, une chaîne de transmission d'images numériques animées selon la technique antérieure, par exemple, dans le cadre d'une visioconférence de type VISIOREUNION (marque enregistrée) entre deux groupes éloignés d'usagers, comprend essentiellement un camescope ou bien une caméra 1, un convertisseur couleur analogique/numérique 2, un codeur par transformée 3, une ligne de transmission LT, un décodeur par transformée 4, un convertisseur couleur numérique/analogique 6 et un moniteur de télévision couleur 7. La caméra 1 produit les signaux analogiques vidéo relatifs à la composante de luminance L et aux deux composantes de chrominance entrelacées, représentatifs d'images animées filmées. La composante de luminance et les composantes de chrominance alternées sont échantillonnées selon un standard de télévision prédéterminé pour chaque pixel en deux mots de 8 bits chacun dans le convertisseur 2 pour être transmis vers le codeur 3. Le codeur traite en série chacune des deux composantes vidéo numérisées, après avoir préalablement découpé l'image à (I.N)(J.N) pixels en une pluralité (I.J) de blocs carrés de dimension (N x N), comme montré à la figure 3. En pratique, sachant que les périodicités d'échantillonnage alternées des composantes de chrominance sont égales à la moitié de celle de la composante de luminance, les blocs de chrominance correspondent chacun à quatre blocs de luminance. Le découpage préalable simplifie le traitement de la transformation effectué ensuite sur les blocs. Cette opération de transformation est donc effectuée sur chacun des blocs séparément. Les coefficients obtenus par la tranformation sont ensuite quantifiés, puis codés pour être transmis dans la ligne de transmission LT.

Une opération inverse à l'opération réalisée par le codeur 3 est alors mise en oeuvre dans le décodeur 4. A une fréquence tenant compte des limites psychovisuelles de l'homme, le décodeur produit des pixels numériques d'images animées reconstituées, correspondant aux images initialement filmées. Ces pixels numériques sont convertis par le convertisseur 6 en trois signaux analogiques vidéo pour être visualisés sous forme des images reconstituées sur l'écran du moniteur de télévision 7.

Un dispositif de filtrage 5 selon l'invention est inséré entre la sortie du décodeur 4 et l'entrée du convertisseur numérique-analogique 6, et reçoit des blocs de chaque image reconstituée, constitués de pixels numériques.

A des fins de simplification, un seul des trois signaux composants vidéo, à savoir le signal le luminance, est considéré dans la description ci-après du dispositif de filtrage. En pratique les trois signaux composants peuvent être filtrés en parallèle par trois dispositifs de filtrage selon l'invention. Le signal à filtrer sera dénommé par la suite "signal composant vidéo". De même la description se limite en un découpage de l'image de dimension (I.N)(J.N) pixels en une pluralité de blocs carrés à $N^2$ pixels, avec N = 8, bien que d'autres découpages en des blocs par exemple à 16 x 16 pixels soient possibles dans le cadre de l'invention. Ainsi dans la description, et conformément au codage par transformation par blocs, chaque image initiale est découpée en des blocs carrés de (8 x 8) pixels comprenant chacun huit segments de ligne ou également huit segments de colonne à huit pixels chacun. Une limite entre deux blocs adjacents est appelée "frontière de bloc". Ces définitions sont précisées dans la figure 3.

En référence aux figures 4 et 5, un premier ensemble d'étapes constitutives du procédé de filtrage d'image selon l'invention concerne la discontinuité de luminosité aux frontières de blocs adjacents.

La figure 4 montre une répartition spatiale de niveau d'amplitude de deux demi-segments, qui comprennent chacun N/2 = 4 pixels d'image A, B, C, et D, respectivement E, F, G et H et qui sont colinéaires de part et d'autre de la frontière FR12 séparant deux blocs accolés BL1 et BL2. En pratique, ces demi-segments sont deux demi-lignes de bloc, ou deux demi-colonnes de bloc, et correspondent à 2(N/2) = 8 pixels successifs d'une ligne, respectivement d'une colonne, de l'image. Les défauts de discontinuité relatifs au codage par transformation de bloc apparaissent principalement au niveau de la frontière séparant les segments des deux blocs. L'axe des abscisses désigne la distance X d'un point central d'un pixel quelconque du segment de l'image à un point d'origine O de celui-ci. Le pixel correspond à un carré élémentaire d x d de l'image où d est la distance entre deux points consécutifs du segment. L'axe des ordonnées est relatif aux niveaux de luminosité NL du signal composant vidéo par exemple quantifié de 0 à $(2^8 - 1)$ = 255, pour les pixels des deux demi-segments considérés. On obtient ainsi une représentation discrète de niveau de luminosité. La distance entre chacun des points centraux de pixel A, B, C, D, E, F, G et H est égale à la longueur d d'un côté d'un pixel. A des fins de simplification, chaque point sera associé au pixel correspondant pour cette première partie du procédé selon l'invention.

Il apparaît une "rupture" de luminosité à la frontière de bloc FR12, entre les points D et E, séparant les deux demi-segments des deux blocs adjacents. Cette rupture correspond en fait à un changement de signe entre deux gradients discrets de luminosité calculés pour le point D, respectivement avec les points C et E adjacents au point D. En effet la différence des niveaux de luminosité NL au point D et au point C précédant le point D suivant la direction OX est positive, et la différence des niveaux de luminosité au point E et au point D précédant le point E suivant la direction OX est négative :

$$NL(D) - NL(C) > 0$$

$$NL(E) - NL(D) < 0$$

Selon un autre exemple, une discontinuité à la frontière FR12 peut être transcrites en des inégalités ayant des signes respectivement opposés aux signes des inégalités précédentes, le niveau au point D étant inférieur aux niveaux aux points C et E.

Afin de supprimer cette discontinuité en luminosité, il serait a priori nécessaire de linéariser le niveau de luminosité du pixel D limitrophe à la frontière par rapport au niveau de luminosité des pixels C et E, et ainsi calculer un nouveau niveau de luminosité pour le pixel D, correspondant à un pixel noté D' dans la figure 4. Dans ce cas là, il est seulement nécessaire de calculer la moyenne arithmétique des niveaux de luminosité des deux pixels adjacents C et E pour le pixel limitrophe D afin d'obtenir le nouveau niveau de luminosité du pixel D en le pixel D' :

$$NL(D') = (NL(C) + NL(E))/2$$

Cette simple approche par linéarisation d'un pixel de discontinuité n'est pas suffisante pour un filtrage satisfaisant de l'image, en raison de certaines caractéristiques concernant les procédés de codage par transformation rappelées ci-après. Comme déjà dit l'opération de transformation consiste à associer à une réprésentation spatiale de chaque bloc d'image, un autre type de représentation, par exemple une représentation fréquentielle dans le cas de la transformation en cosinus discrète (TCD).

Après cette transformation d'image en vue d'une réduction de débit en transmission, une quantification est réalisée, consistant en un écrêtage pour borner les coefficients du bloc ayant une trop grande amplitude et un seuillage pour éliminer ceux ayant une trop faible amplitude. Entre ces deux extrêmes, une quantification linéaire uniforme est appliquée pour les coefficients de la représentation transformée : un pas de quantification linéaire QZ est ainsi utilisé pour la quantification des coefficients transformés du bloc à transmettre.

Néanmoins ce pas de quantification QZ est modifié en fonction de l'évolution dynamique de l'image et de la finesse spatiale souhaitée. En d'autres termes, le pas de quantification peut changer d'un bloc à un autre bloc dans une même image, et peut changer dans un même bloc situé au même emplacement d'une image à la suivante. En effet, les coefficients dans la représentation en transformée en cosinus discrète ont chacun un "rôle" dans la reconstitution de l'image aussi bien en ce qui concerne des contours et des formes générales qu'en ce qui concerne la finesse et la "texture" de l'image. Les pas de quantification QZ1 et QZ2 des deux blocs BL1 et BL2 sont ainsi modifiés en fonction de l'évolution dynamique de l'image et en dépendance de la limitation du débit en transmission. De manière connue, le pas de quantification de chaque bloc d'images est transmis avec et avant les coefficients quantifiés sélectionnés du bloc, du codeur 3 vers le décodeur 4, par multiplexage temporel, pour reconstituer le bloc dans le décodeur.

En référence à nouveau à la figure 4, si le pas de quantification est petit, un écart de discontinuité ED égal à la différence des niveaux de luminosité du pixel limitrophe D initial et du pixel corrigé par linéarité, tel que calculé précédemment en le point D', sera représentatif d'une erreur réelle de discontinuité uniquement pour de faibles valeurs de ED. Inversement pour des valeurs élevées de cet écart ED, en supposant toujours qu'un pas de quantification petit est utilisé, ces valeurs élevées de discontinuité traduisent une "rupture" de luminosité réelle dans l'image (contour,...), et non pas une erreur de discontinuité due au codage.

En résumé, pour cet ensemble de premières étapes, l'invention préconise donc la détection de rupture de discontinuité en luminosité, par calcul pour chacun des pixels limitrophes D et E à la frontière des deux blocs BL1 et BL2, de deux gradients discrets de luminosité $[NL(D) - NL(C)]$ et $[NL(E) - NL(D)]$, $[NL(F) - NL(E)]$ et $[NL(E) - NL(D)]$, respectivement avec les deux pixels adjacents audit pixel limitrophe. Si les deux gradients calculés pour le pixel limitrophe du bloc donné conduisent à deux valeurs ayant des signes opposés, il y a discontinuité. Cette opération est réalisée dans le sens des segments des blocs constituant l'image, c'est-à-dire par exemple suivant le balayage de ligne de la gauche vers la droite, ou suivant le balayage de colonne, de haut en bas. Dans le cas d'une discontinuité est calculée la valeur absolue de la différence entre le niveau de luminosité du pixel limitrophe D et la moyenne arithmétique $NL(D') = [NL(E) + NL(C)]/2$ des niveaux de luminosité des pixels adjacents E et C audit pixel limitrophe D. Ce calcul de valeur absolue donne l'écart de discontinuité ED. A cet écart de discontinuité est associé un facteur de correction de discontinuité FCD en fonction du pas de quantification QZ utilisé pour les codage et décodage du bloc.

A titre indicatif, deux courbes CQP et CQG montrées à la figure 5 ont été obtenues expérimentalement et sont représentatives de la fonction FCD(ED). Les deux courbes CQP et CQG correspondent à deux valeurs de pas de quantification respectivement petit et grand. Plus le pas de quantification QZ1, QZ2 du bloc BL1, BL2 est petit, plus l'erreur en discontinuité ED sera représentative d'une caractéristique naturelle de l'image comme il a été précisé précédemment. Ainsi le niveau de luminosité du pixel limitrophe discontinu D est corrigé par le facteur de correction de discontinuité associé FCD qui dépend de l'erreur de discontinuité ED initialement calculée. Plus précisément, ce facteur de correction de discontinuité FCD associé à l'erreur de discontinuité ED et sélectionné en fonction du pas de quantification est rajouté ou soustrait au niveau de luminosité du pixel limitrophe discontinu D, en fonction du signe de la différence du niveau du point limitrophe D et de la moyenne des niveaux des points adjacents C et E, soit

$$NL(D1) = NL(D) + k_D.FCD(ED)$$

avec

$$k_D = 1 \text{ si } NL(D) < NL(D')$$

et

$$k_D = -1 \text{ si } NL(D) > NL(D').$$

Selon la figure 5, les courbes illustrées CQP et CQG qui ont conféré des résultats de correction d'image tout-à-fait acceptables, sont composées chacune de trois segments de droite formant un trapèze avec l'axe ED à partir de l'origine $O_D$, correspondant à ED = 0. Par exemple la courbe CQP comprend

un premier segment de droite ayant une pente positive P1, issu du point 0 et ayant pour extrémité un point d'abscisse ED1,
un second segment de droite ayant une pente P2 = 0, parallèle à l'axe des abscisses et compris entre des points d'abscisses ED1 et ED2, et
un troisième segment de droite ayant une pente négative P3, telle que $|P3| < P1$ et issu du point d'abscisse ED2.

A chaque pas de quantification QZ correspond un mot de 16 bits incluant un mot de deux bits pour la pente P1, un mot à 6 bits pour l'abscisse ED1, un mot à 2 bits pour la pente P3, et un mot à 6 bits pour l'abscisse ED1, ce qui permet de déduire la courbe de correction. Comme on le verra dans la suite, les mots à 16 bits des paramètres de correction sont inclus dans une mémoire de tables adressée par le pas de quantification de bloc. En pratique, les valeurs de P1 et P2 peuvent prendre quatre valeurs, par exemple 1/4, 1/2, 1 et 2.

Il est à noter que selon la figure 4, les inéquations $NL(D) > NL(E) > NL(F)$ impliquent l'absence de discontinuité au point E du bloc BL2, et donc aucune correction, soit E = E1; par contre, si $N(E) < NL(F)$, le point E serait corrigé en un point E1.

Aux effets de discontinuité, dans l'apparence de l'image reconstituée, s'ajoutent un "effet de bloc" dû à une erreur de quantification d'un bloc à un bloc adjacent audit bloc. Cet effet de bloc se traduit par une discontinuité sur la valeur moyenne de luminosité de blocs adjacents. Il est rappelé que cette valeur moyenne des niveaux de luminosité des N x N = 64 pixels dans un bloc est signalée par le premier coefficient représentative de la composante basse-fréquence dans la représentation transformée du bloc. Une petite différence d'amplitude entre deux coefficients respectifs de même rang dans deux blocs adjacents peut engendrer des niveaux de quantification différents pour le codage des blocs. Après décodage, les deux blocs adjacents apparaissent alors avec des niveaux moyens de luminosité différents fonction des niveaux de quantification respectifs transmis par le codeur au décodeur.

Le but de ces secondes étapes du procédé de filtrage selon l'invention est de réduire cet effet de bloc et donc, en pratique, imposer à l'image reconstituée, après le filtrage selon l'invention, un aspect de "continuité naturelle" de luminosité entre blocs adjacents. Cet effet de bloc est d'autant plus marqué que le pas de quantification est grand, ou que la différence entre les pas de quantification relatifs aux deux blocs adjacents est grande.

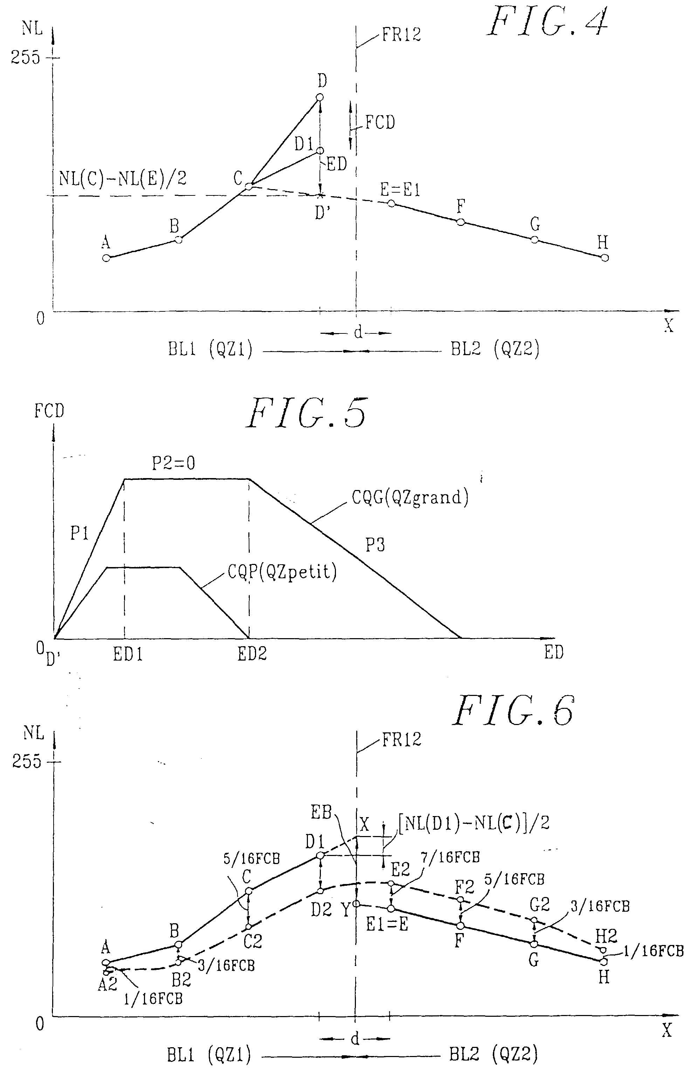

Cette seconde étape du procédé concerne, comme précédemment, chacun des demi-segments de pixels, c'est-à-dire deux demi-lignes ou demi-colonnes, de deux blocs adjacents séparés par une frontière de bloc, et est expliqué ci-après en référence au diagramme de niveau de luminosité montré à la figure 6.

Afin d'accentuer la finesse du filtrage spatial pour ces secondes étapes du procédé, et en sachant que les huit points des deux demi-segments colinéaires A à D et E à H dans les blocs adjacents BL1 et BL2 sont des points imaginaires centraux des pixels correspondants, volontairement associés aux pixels dans les premières étapes précédentes, il est proposé de "prédire" deux niveaux de luminosité, purement fictifs, de deux points X et Y imaginaires placés sur la frontière FR12 entre les blocs BL1 et BL2. Cela peut être établi par une transposition d'une représentation discrète d'une image à base de pixels à une représentation continue (points) qui correspond à la réalité. Ainsi chaque pixel étant un carré de côté de longueur fixée prédéterminée d (résolution de l'image), il est calculé, pour chaque pixel limitrophe corrigé en discontinuité D1, E1 à la frontière de bloc FR12, une différence de niveau de luminosité entre le pixel limitrophe et le pixel adjacent C, F du même segment du bloc. Les pixels limitrophes sont les pixels D1 et E1 corrigés en discontinuité selon les premières étapes du procédé. Au niveau de luminosité d'un pixel limitrophe, par exemple D1, est additionnée ou soustraite, en fonction du signe de la différence, la moitié de la différence précitée pour obtenir, par prédiction, le niveau de luminosité d'un point fictif X à la frontière de bloc puisque la distance séparant un point imaginaire central du pixel D1 de la frontière est égal à la demi-longueur d/2 d'un côté d'un pixel. Cette opération se traduit, par exemple pour le pixel D1, par la relation suivante :

$$NL(X) = NL(D1) + [NL(D1) - NL(C)]\,/2$$

Deux niveaux de luminosité NL(X) et NL(Y) pour deux points fictifs X et Y sont ainsi obtenus à partir des deux points limitrophes D1 et E1. Les pixels limitrophes D1 et E1 (ou points) représentés sur la figure 6 sont des pixels traités en discontinuité à la frontière de bloc; un écart de bloc EB égal à $|NL(X)-NL(Y)|$ doit être imputé à l'ensemble des deux demi-segments, puisqu'il correspond à une erreur de quantification entre les deux composantes moyennes respectives des deux blocs.

Cette notion peut être précisée par analogie avec la thermodynamique. Lorsque deux corps respectivement chaud et froid (deux demi-segments ayant des niveaux moyens de luminosité différents) sont mis en contact, une homogénéisation des températures (de l'image) des deux corps prend place par modification de la température en chacun des points les constituant (pixels) proportionnellement à la distance les séparant des côtés des corps en contact (frontière de bloc). Pour l'image, cette analogie doit s'arrêter à l'instant où l'on atteint entre les deux demi-segments une différence moyenne de luminosité qui est naturelle à l'image (assombrissement naturel du bloc,...).

De manière similaire aux premières étapes du procédé, si l'écart de bloc EB, égal à la différence de niveaux de luminosité NL(X) - NL(Y) de deux points fictifs à la frontière de bloc, atteint une valeur élevée alors que le pas de quantification QZ est petit, l'écart de bloc n'est pas dû seulement à la quantification, mais constitue certainement un élément naturel dans l'image (assombrissement).

Ainsi, à cet écart de bloc EB est associé un facteur de correction de bloc FCB pour les demi-segments des blocs BL1 et BL2, en fonction des pas de quantification QZ1, QZ2 dans ces blocs respectivement. Des courbes sensiblement analogues à celles présentées en référence à la figure 5 ont été obtenues expérimentalement afin d'associer à chaque écart de bloc EB, un facteur de correction de bloc FCB selectionné en fonction des deux pas de quantification. Comme explicité par l'analogie avec la thermodynamique, une homogénéité naturelle de l'image est obtenue en pondérant ce facteur de correction de bloc FCB par des coefficients respectifs décroissants en proportion de l'éloignement du pixel concerné à la frontière FR12. Les différentes valeurs de correction de bloc pondérées sont soustraites ou additionnées aux pixels respectifs des deux demi-segments, en fonction du signe de la différence des niveaux de luminosité NL des pixels limitrophes D1 et E.

A titre d'exemple, comme illustré à la figure 6, les coefficients de pondération sont 7/16, 5/16, 3/16 et 1/16 pour les quatre pixels respectifs D1, C, B et A; E1, F, G et H d'un demi-segment. Les ordonnées des points pondérés correspondants D2, C2, B2 et A2; E2, F2, G2 et H2 dans la figure 6 représentent les niveaux de luminosité obtenus après correction de l'effet de bloc.

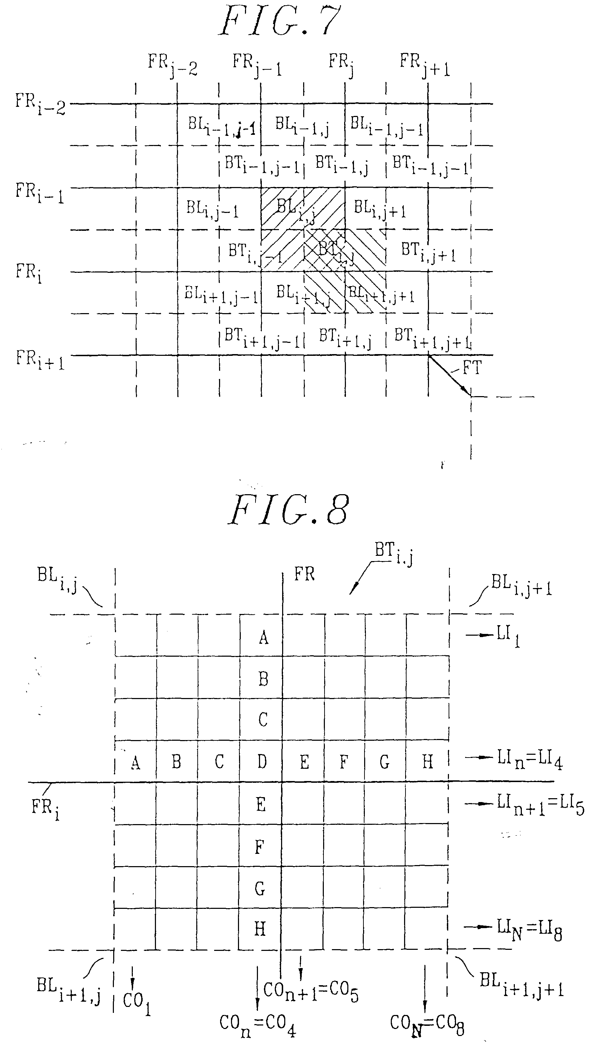

Un dispositif de filtrage d'image numérisée pour la mise en oeuvre des premières et secondes étapes précitées du procédé selon l'invention est maintenant décrit en référence aux figures 7, 8 et 9 .

Selon le procédé de l'invention décrit ci-dessus, les étapes du procédé sont appliquées relativement aux frontières des blocs à $N^2 = 8 \times 8$ pixels découpés dans l'image pour un codage par transformation, et plus précisément relativement à des groupes à deux et quatre pixels de ligne ou de colonne de part et d'autre des frontières. La figure 7 montre que chaque bloc $BL_{i,j}$ jouxte quatre blocs adjacents $BL_{i,j-1}$, $BL_{i-1,j}$, $BL_{i,j+1}$ et $BL_{i+1,j}$ et est séparé de ceux-ci respectivement par quatre frontières $FR_{j-1}$, $FR_{i-1}$, $FR_j$ et $FR_i$, i et j étant des indices entiers respectivement compris entre 1 et I, et 1 et J. Afin d'effectuer le traitement de filtrage selon l'invention sur chaque couple de demi-lignes et chaque couple de demi-colonnes partagés par les frontières correspondantes, les blocs carrés initiaux $BL_{i,j}$ sont transformés en des blocs carrés $BT_{i,j}$ qui sont translatés suivant l'une des directions de diagonale de bloc et d'un pas égal à une demi-diagonale de bloc, comme indiqué par la flèche FT dans la figure 7. Les frontières des blocs initiaux $BL_{i,j}$ constituent des axes centraux horizontaux et verticaux des blocs translatés $BT_{i,j}$. La figure 8 montre plus en détail un bloc translaté $BT_{i,j}$ qui est composé de 8 x 8 = 64 pixels, soit une matrice de 8 segments de ligne à 8 pixels LI1 à LIN et de 8 segments de colonnes à 8 pixels $CO_1$ à $CO_N$, et dont les axes horizontal et vertical $FR_i$ et $FR_j$ correspondent à deux frontières perpendiculaires du bloc initial $BL_{i,j}$.

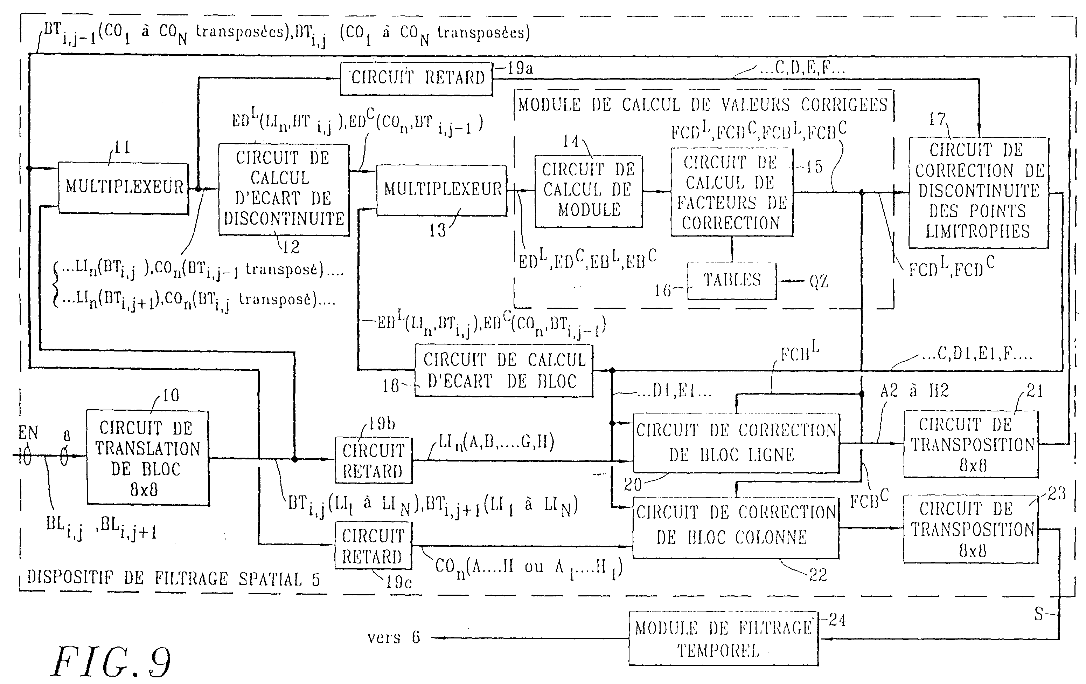

Comme montré à la figure 9, le dispositif de filtrage spatial 5 selon l'invention comprend un circuit de translation de bloc 10, un premier multiplexeur 11, un circuit de calcul d'écart de discontinuité 12, un second multiplexeur 13, un circuit de calcul de module 14, un circuit de calcul de facteurs de correction 15 associé à une mémoire de tables 16, un circuit de correction de discontinuité 17, un circuit de calcul d'écart de bloc 18, un premier circuit à retard 19a et deux seconds circuits à retard identiques 19b et 19c, deux circuits 20 et 22 pour correction de bloc respectivement en ligne et en colonne, et deux circuits de transposition de blocs 21 et 23.

La relative complexité du dispositif de filtrage résulte du traitement bidimensionnel, en ligne et en colonne, réalisé sur chacun des blocs translatés dans une image. En effet, la correction en discontinuité selon les figures 4 et 5 et la correction en bloc selon la figure 6 sont réalisées sur chacun des segments de ligne et des segments de colonne des blocs translatés.

Chaque image numérisée reconstituée par le décodeur 4 (figure 2) est appliquée sous forme de signaux numériques de pixel à une entrée EN du dispositif de filtrage. Cette entrée EN est en pratique un bus à huit fils qui applique des groupes de N = 64 mots successifs de pixel ayant chacun 8 bits parallèles à l'entrée du circuit 10, les groupes de mot représentant sous forme numérique les blocs reconstitués numériques $BL_{i,j}$. Tous les circuits inclus dans le dispositif de filtrage sont des circuits numériques qui sont commandés via une base de temps (non représentée) reliée au décodeur 4, par divers signaux d'horloge signalant notamment la période des mots de pixel, la période des segments à 8 pixels, le début et la fin de chaque bloc, le début et la fin de chaque image, et les pas de quantification des blocs initiaux. Le circuit 10 opère une translation des blocs $BL_{i,j}$ dans l'image reconstituée en des blocs translatés $BT_{i,j}$ de 8 x 8 pixels, présentant des axes horizontaux et verticaux correspondant à des frontières de blocs dans le découpage de l'image pour le codage et décodage par transformation de blocs. Le circuit 10 produit en sortie 8 mots de niveaux de luminosité respectivement pour les 8 pixels de chacune des huit lignes d'un bloc translaté.

Le cycle de fonctionnement du dispositif de filtrage 5 relatif à un bloc translaté, qui est détaillé ci-après, est décomposé, conformément au procédé à deux ensembles d'étapes de l'invention, en deux étapes successives pour chacun des segments de ligne $LI_1$ à $LI_N$, puis pour chacun des segments de colonne $CO_1$ à $CO_N$ dans un bloc translaté $BT_{i,j}$ (figure 8).

Selon une réalisation simple du dispositif de filtrage, celui-ci pourrait comprendre une chaîne de traitement comprenant en série un premier moyen pour successivement calculer des facteurs de correction $FCD^L$ et $FCB^L$ des N segments de ligne, l'exposant "L" indiquant une correction relative à une ligne, et corriger en conséquence les segments de ligne en des premiers segments corrigés constituant un premier bloc corrigé, puis un second moyen pour successivement calculer des facteurs de correction $FCD^C$ et $FCB^C$ de N segments de colonne issus du premier bloc corrigé, l'exposant "C" indiquant une correction relative à une colonne, en des seconds segments corrigés constituant un second bloc corrigé.

Une telle réalisation comprend deux moyens de calcul et de correction qui sont identiques compte tenu du caractère bidimensionnel du traitement d'un bloc. Afin de réduire le coût du dispositif de filtrage, la réalisation illustrée à la figure 9 ne comprend qu'un moyen de calcul et de correction utilisé à la fois pour les segments de ligne et les segments de colonne. Ce moyen de calcul et de correction est essentiellement constitué par les circuits 12 à 18 pour ce qui concerne le calcul des facteurs de correction. Toutefois, les traitements successifs de l'ensemble des segments de ligne, puis de l'ensemble des segments de colonne imposent deux conditions.

La première condition consiste à transposer le premier bloc corrigé après la correction de tous les segments de ligne dans le bloc translaté et avant la correction de tous les segments de colonne, afin que les colonnes du premier bloc corrigé soient appliquées en série comme des lignes aux circuits 12 à 18. La correction finale des segments de ligne, relative aux facteurs de correction en bloc $FCB^L$, est effectuée dans le circuit 20 et la transposition du premier bloc corrigé est effectuée dans le circuit 21. De même, le circuit 22 corrige les colonnes transposées en lignes du premier bloc corrigé, et le circuit 23 transpose les lignes du premier bloc corrigé, après correction de toutes les colonnes transposées en ligne, en colonne de second bloc corrigé afin que ce bloc corresponde au bloc translaté entrant mais corrigé en ligne et colonne.

La seconde condition résulte de la durée du traitement d'un bloc qui, a priori, est au moins égal au double de la durée de transmission des N segments de ligne du bloc translaté $BL_{i,j}$ en entrée, puisque N segments de ligne sont traités, puis N segments de colonne sont traités. En d'autres termes, après que les N segments de ligne du bloc $BT_{i,j}$ soient entrés et traités, les N segments de ligne du bloc suivant $BT_{i,j+1}$ sont transmis par le circuit de translation de bloc 10. A cet effet, un premier multiplexeur 11 est prévu dans le dispositif de filtrage afin de multiplexer deux-à-deux les N segments de colonne transposés en lignes du premier bloc corrigé sortant du circuit 21 et relatif au bloc $BT_{i,j}$, et les N segments de ligne du bloc suivant $BT_{i,j+1}$ sortant du circuit 10. Ainsi pour un bloc donné $BT_{i,j}$, les N segments de ligne du bloc $BT_{i,j}$ transmis par le circuit 10 sont corrigés dans les circuits 12 à 18 et 20 pendant que les N segments de colonne transposés en ligne du bloc précédent $BT_{i,j-1}$ transmis par le circuit de transposition 21 sont corrigés par les circuits 12 à 18 et 22; puis d'une manière analogue, les N segments de colonne transposés en ligne du bloc donné $BT_{i,j}$ transmis par le circuit de transposition 21 sont corrigés dans les circuits 12 à 18 et 22, pendant que les N segments de ligne du bloc suivant $BT_{i,j+1}$ transmis par le circuit 10 sont corrigés dans les circuits 12 à 18 et 20.

Les deux conditions précédentes impliquent une relative complexité du dispositif de filtrage, bien que le coût de celui-ci soit réduit comparativement à la réalisation simple.

Le fonctionnement du dispositif de filtrage 5 est maintenant décrit principalement pour la correction d'un segment de ligne quelconque $LI_n$ du bloc $BT_{i,j}$, puis pour la correction d'un segment de colonne quelconque transposé en ligne $CO_n$ du premier bloc corrigé en ligne correspondant au bloc $BT_{i,j-1}$, n étant un indice entier compris entre 1 et N = 8.

Chacun des signaux à huit mots de pixel relatifs aux segments de ligne du bloc translaté $BT_{i,j}$ est appliqué à une entrée du circuit de correction de bloc en ligne 20 à travers le circuit à retard 19b. Le circuit 20 corrige chacun $LI_n$ des N segments de ligne du bloc translaté $BT_{i,j}$ ainsi reçu en fonction d'un facteur de correction de bloc respectif $FCB^L$ qui est appliqué à une entrée de facteur du circuit 20 et qui est calculé selon les deuxièmes étapes du procédé. Les huit facteurs de correction de bloc pour les lignes des blocs $BT_{i,j}$ sont relatives aux couples de pas de quantification dans les blocs $BL_{i,j}$ - $BL_{i,j+1}$ et $BL_{i+1,j}$ - $BL_{i+1,j+1}$ qui sont respectivement utilisés pour les quatres premières et les quatres dernières lignes du bloc $BT_{i,j}$. Les segments de ligne ainsi successivement corrigés sont mémorisés dans une mémoire RAM incluse dans le circuit de transposition 21 qui est lue pour transposer le premier bloc corrigé en ligne en des colonnes $CO_1$ à $CO_N$ lorsque les 8 segments de ligne $LI_1$ à $LI_8$ ont été corrigés. Les 8 segments de colonne du premier bloc corrigé en ligne sont ainsi appliquées en série par le circuit 21 à une seconde entrée du multiplexeur 11.

Simultanément, lorsque cette seconde entrée reçoit les segments de colonne transposés $CO_1$ à $CO_N$ du bloc $BT_{i,j-1}$, une première entrée du multiplexeur 11 reçoit du circuit 10, les lignes du bloc translaté suivant $BT_{i,j}$ et multiplexe celles-ci. Par exemple, le segment de ligne $LI_1$ du bloc $BT_{i,j}$ et le segment de colonne transposé $CO_1$ du bloc $BT_{i,j-1}$ multiplexés sont appliqués successivement aux circuit 12 et 19a. Le circuit 12 effectue successivement deux calculs d'écart de discontinuité respectivement pour le segment de ligne et le segment de colonne multiplexés et produit en sortie deux écarts de discontinuité $ED^L$ et $ED^C$ respectifs selon les premières étapes du procédé.

Les deux écarts de blocs respectifs $EB^L$ et $EB^C$ sont fournis à une première entrée du multiplexeur 13 afin que les circuits 14 et 15 procèdent au calcul des facteurs de correction de discontinuité correspondant $FCD^L$ et $FCD^C$ en fonction des pas de quantification QZ. Comme signalé précédemment, les pas de quantification sont fournis par le décodeur 4 avant la correction des blocs d'une image reconstituée et adressent la mémoire de tables 16.

Ainsi pour corriger les quatre premiers et les quatre derniers segments de ligne $LI_1$ à $LI_4$ et $LI_5$ à $LI_8$ dans le bloc $BT_{i,j}$, la mémoire 16 fournit des mots de paramètre de courbe de correction qui dépendent des pas de quantification des blocs $BL_{i,j}$ et $BL_{i,j+1}$, respectivement des blocs $BL_{i+1,j}$ et $BL_{i+1,j+1}$, afin que le circuit 15 calcule les deux facteurs $FCD^L$ de chacun des huit segments de ligne. De même, pour corriger les quatre premier et les quatre derniers segments de colonne transposés $CO_1$ à $CO_4$ et $CO_5$ à $CO_8$ dans le premier bloc corrigé $BT_{i,j}$, la mémoire 16 fournit des mots de paramètre qui dépendent du pas de quantification des blocs $BL_{i,j}$ et $BL_{i+1,j}$, respectivement des blocs $BL_{i,j+1}$ et $BL_{i+1,j+1}$ afin que le circuit 15 calcule les deux facteurs $FCD^C$ de chacun des huit segments de colonne transposés. Il est rappelé que les courbes de correction sont du type de celles illustrées à la figure 5. Le circuit de calcul 14 calcule le module (valeur absolue) de l'écart de discontinuité $ED^L$, $ED^C$ correspondant à une différence de niveau de luminosité qui peut être positive ou négative. Le signe de cet écart importe peu pour calculer les facteurs de correction $FCD^L$, $FCD^C$ dépendant chacun d'un pas de quantification QZ dans un quart du bloc $BT_{i,j}$ pour les points D et E (figure 4). Les facteurs de correction de discontinuité $FCD^L$, $FCD^C$ avec les signes des écarts $ED^L$ et $ED^C$ sont fournis sous forme multiplexée par le circuit 15 au circuit 17.

Le circuit de correction de discontinuité de points limitrophes (D1, E1) 17 reçoit les deux valeurs de correction de discontinuité $FCD^L$ et $FCD^C$ multiplexées et les segments de ligne $LI_n$ et les segments de colonne $CO_n$ multiplexés à une seconde entrée du circuit 17 à travers le circuit à retard 19a. Le circuit à retard 19a retarde les couples de segments de ligne et colonne multiplexés d'une durée nécessaire aux calculs d'écart et facteur de correction effectués par les circuits 12 à 15. Le circuit 17 reçoit donc simultanément un segment de ligne $LI_n$ ou de colonne transposé $CO_n$ et le facteur de correction de discontinuité $FCD^L$ ou $FCD^C$ de manière à produire en sortie un segment et particulièrement des niveaux de luminosité corrigés NL(D1) et NL(E1) selon la figure 4 en discontinuité, cela pour la ligne $LI_n$ du bloc $BT_{i,j}$ et la colonne $CO_n$ du bloc $BT_{i,j-1}$. Après la fin de ces premières étapes de procédé, le segment corrigé est appliqué à une entrée du circuit de calcul d'écart de bloc 18 qui calcule l'écart de bloc correspondant $EB^L$, $EB^C$ selon les secondes étapes du procédé.

Des couples d'écart de bloc $EB^L$, $EB^C$ produit par le circuit 18 sont ainsi appliqués à une seconde entrée du multiplexeur 13 pour y être multiplexés avec des couples d'écart de discontinuité $ED^L$, $ED^C$.

Les circuits 14 et 15 sont à nouveau utilisés pour calculer les facteurs de correction de bloc $FCB^L$ et $FCB^C$ correspondant au couple $EB^L$, $EB^C$. Le facteur de correction de bloc pour chacun des segments de ligne ou de colonne transposé dépend des deux pas de quantification QZ des deux blocs adjacents dont sont issus les demi-segments du segment, d'une manière analogue aux premières étapes. Le circuit 14 établit également le module et le signe de l'écart correspondant $EB^L$, $EB^C$ de manière à ce que le module d'écart soit utilisé pour le calcul du facteur $FCB^L$, $FCB^C$ dans le circuit 15, et le signe d'écart signale au circuit de correction correspondant 20, 22 si le facteur doit être soustrait des ou additionné aux niveaux des demi-segments, tels que A, B, C et D1, et E1, F, G et H (figure 6), du segment considéré.

Lorsque le facteur $FCB^L$ d'un segment de ligne $LI_n$ est appliqué par le circuit 15 à l'entrée de facteur du circuit de correction 20, le premier mot de niveau de pixel A dans le segment $LI_n$ est appliqué par le circuit à retard 19b au circuit 20. Les niveaux des pixels de segment sont ainsi corrigés successivement à la fin de ces secondes étapes. Toutefois, à la fin des premières étapes, les niveaux des points corrigés, tels que D1 et E1, transmis par le circuit 17 sont mémorisés dans le circuit 20 afin que les pixels D1 et E1, à la place des points D et E, soient corrigés en les pixels D2 et E2 (figure 6) lorsque le facteur correspondant $FCB^L$ a été calculé. Les niveaux des pixels corrigés A2 à H2 sont ainsi mémorisés successivement dans le circuit de transposition 21 jusqu'à ce que les N = 8 segments de ligne du bloc considéré $BT_{i,j}$ soient corrigés, avant de procéder à la transposition des colonnes du premier bloc corrigé correspondant.

D'une manière analogue, les niveaux des pixels D1 et E1 d'un segment de colonne transposé $CO_n$ transmis par le circuit 17 sont mémorisés temporairement dans le circuit de correction 22 à la fin des premières étapes, et le facteur de correction correspondant $FCB^C$ est appliqué au circuit 22 lorsque le circuit à retard 19c relié à la sortie du circuit de transposition 21 fournit le niveau du premier pixel A du segment de colonne transposé $CO_n$. Les niveaux des huits pixels de ce segment sont ainsi successivement corrigés dans le circuit 22 et mémorisés dans le circuit 23. Après la correction complète du huitième segment de colonne transposé, le circuit 23 procède à la transposition du second bloc corrigé ainsi produit afin que celui-ci soit transmis segment de ligne par segment de ligne par une sortie S du dispositif de filtrage 5.

Il est à noter que, conformément au traitement des deux ensembles d'étapes du procédé, les trois premiers et derniers segments de colonne transposés du premier bloc corrigé correspondant à un bloc $BT_{i,j}$ sont identiques aux colonnes $CO_1$ à $CO_3$ et $CO_5$ à $CO_8$ dans le bloc $BT_{i,j}$, puisque les premières étapes ne procèdent qu'à la correction des niveaux pixels centraux D et E en les pixels D1 et E1. Par contre, les quatrièmes et cinquième segments transposés centraux du premier bloc transposé appliqué par le circuit 21 au circuit 22 via le circuit à retard 19c ne comprennent que des niveaux de points A1 à H1 corrigés par le circuit de correction 17.

De ce qui précède, il apparaît que les circuits à retard 19b et 19c imposent chacun un retard égal à la somme de :

- la durée du calcul de deux facteurs de correction de discontinuité successifs $FCD^L$ et $FCD^C$ dans les circuits 12 à 16, ce qui correspond sensiblement au retard imposé par le premier circuit à retard 19a,
- la durée de deux corrections de discontinuité dans le circuit 17 et des deux calculs d'écart de bloc dans le circuit 18, et
- la durée du calcul de deux facteurs de correction de bloc dans les circuits 13 à 16.

Ainsi, en pratique, le retard imposé par chacun des circuits à retard 19b et 19c est sensiblement égal au triple du retard imposé par le circuit 19a.

Comme montré à la figure 9, un module de filtrage temporel 24 de type connu est de préférence mis en série à la sortie S du dispositif de filtrage spatial 5 selon l'invention pour notamment atténuer le bruit inter-image entre deux images successives. Le module de filtrage temporel 24 comprend un filtre récursif programmable. Chaque image traitée produite à la sortie S du dispositif 5 est comparée avec l'image précédemment traitée et est mémorisée dans une mémoire d'image pour être comparé avec l'image suivante.

Chaque image est alors corrigée en fonction d'une différence qui a été déduite de la comparaison avec l'image précédente, selon une loi non linéaire de cette différence. Les différences de faible amplitude sont réduites, tandis que les différences d'amplitude élevées ne sont pas modifiées.

## Revendications

1. Procédé de filtrage d'une image numérique obtenue après codage et décodage par transformation et quantification de blocs de pixels de dimension N x N,

chacun de blocs décodés $(BL_{i,j})$ dans l'image étant constitué de N segments parallèles ($LI_1$ à $LI_N$, ou $CO_1$ à $CO_N$) de pixels ayant des niveaux de luminosité respectifs (NL(A) et NL(H)) et étant séparé, en ligne et en colonne, de blocs adjacents ($BL_{i,j-1}$, $BL_{i-1,j}$, $BL_{i,j+1}$, $BL_{i+1,j}$) par des frontières respectives ($FR_{j-1}$, $FR_{i-1}$, $FR_j$, $FR_i$),
le procédé étant caractérisé par les étapes suivantes pour chaque demi-segment (A, B, C, D) desdits N segments d'un bloc donné (BL1) séparé d'un demi-segment colinéaire correspondant (E,F,G,H) dans l'un des blocs adjacents (BL2) par l'une respective (FR12) des frontières :

- détection de discontinuité en niveau de luminosité par rapport au pixel (D) dudit chaque demi-segment limitrophe à ladite frontière respective (FR12) lorsque deux gradients discrets de niveau de luminosité dépendant respectivement des niveaux de luminosité des deux pixels (C, E) adjacents audit pixel limitrophe (D) ont des signes opposés; et

en réponse à la détection de ladite discontinuité en niveau de luminosité par rapport audit pixel limitrophe (D) :

- évaluation d'un écart de discontinuité (ED) égal à la valeur absolue de la différence entre le niveau de luminosité (NL) du pixel limitrophe (D) et la moyenne arithmétique des niveaux de luminosité des pixels adjacents (C,E); et
- correction du niveau de luminosité (NL) du pixel limitrophe (D) en un niveau de luminosité corrigé (NL(D1)) respectivement

par soustraction audit niveau de luminosité (NL) du pixel limitrophe (D) d'un facteur de correction de discontinuité (FCD) dépendant dudit écart de discontinuité (ED) et d'un pas de quantification (QZ1) utilisé au codage et décodage par transformation dudit bloc donné (BL1), lorsque ledit niveau de luminosité (NL) du pixel limitrophe (D) est supérieur à ladite moyenne arithmétique, et
par addition dudit facteur de correction de discontinuité (FCD) audit niveau de luminosité du pixel limitrophe (NL) lorsque ledit niveau de luminosité du pixel limitrophe (D) est inférieur à ladite moyenne arithmétique.

2. Procédé conforme à la revendication 1, caractérisé en ce que le facteur de correction de discontinuité (FCD) est une fonction sensiblement trapézoïdale dudit écart de discontinuité (ED), pour un pas de quantification prédéterminé (QZ).

3. Procédé conforme à la revendication 1 ou 2, caractérisé par les étapes suivantes pour ledit chaque demi-segment (A, B, C, D) dans ledit bloc donné (BL1) et ledit segment colinéaire correspondant (E, F, G, H) du bloc adjacent (BL2) séparés par ladite frontière (FR12) :

- pour chacun (A, B, C, D) des demi-segments, évaluation d'un niveau de luminosité fictif (NL (X)) à ladite frontière (FR12) respectivement

égal à la somme du niveau corrigé de luminosité (NL(D1)) dudit pixel limitrophe dudit chaque demi-segment et de la demi-différence du niveau de luminosité corrigé dudit pixel limitrophe et d'un niveau de luminosité (NL(C)) d'un pixel (C) dudit demi-segment qui est adjacent audit pixel limitrophe lorsque le niveau corrigé (NL(D1)) dudit pixel limitrophe est supérieur au niveau de luminosité (NL(C)) dudit pixel adjacent (C) audit pixel limitrophe (D1), et
égal à la différence dudit niveau corrigé NL (D1) dudit pixel limitrophe et de ladite demi-différence lorsque ledit niveau corrigé dudit pixel limitrophe dudit demi-segment est inférieur audit niveau dudit pixel adjacent audit pixel limitrophe dudit demi-segment;

- évaluation d'un écart de bloc (EB) égal à la différence des deux niveaux de luminosité fictifs (NL(X), NL(Y)) évalués pour ledit chaque demi-segment et ledit demi-segment correspondant;
- détermination d'un facteur de correction de bloc (FCB) en fonction dudit écart de bloc (EB) et de pas de quantification (QZ1, QZ2) utilisés au codage et décodage par transformation desdits bloc donné et bloc adjacent (BL1, BL2) respectivement; et

- correction des niveaux de luminosité des pixels dudit chaque demi-segment et dudit demi-segment correspondant respectivement

par soustraction du facteur de correction de bloc (FCB) pondéré de coefficients décroissants respectivement en proportion aux éloignements desdits pixels de la frontière entre ledit chaque demi-segment et ledit demi-segment correspondant, lorsque le niveau de luminosité fictif (NL(X)) relatif audit chaque demi-segment est supérieur au niveau de luminosité fictif (NL(X)) relatif audit demi-segment correspondant, et

par addition du facteur de correction de bloc (FCB) pondéré par lesdits coefficients lorsque le niveau de luminosité fictif relatif audit chaque demi-segment est inférieur au niveau de luminosité fictif relatif audit demi-segment correspondant.

4. Procédé conforme à la revendication 3, caractérisé en ce que l'entier N est égal à huit et les coefficients sont 7/16, 5/16, 3/16 et 1/16.

5. Procédé conforme à l'une quelconque des revendications 1 à 4, caractérisé en ce que les segments sont des lignes ou des colonnes de pixels dans les blocs.

6. Procédé de filtrage d'une Image numérisée, caractérisé en ce qu'il comprend

préalablement une translation de chacun des blocs de segments ($BL_{i,j}$) de l'image en un bloc translaté ($BT_{i,j}$) suivant une demi-diagonale (FT) dudit bloc, puis une série d'étapes conformes à l'une quelconque des revendications 1 à 5 et relatives à chacun des deux demi-segments composant chacun des lignes ($LI_n$), respectivement colonnes, dudit bloc translaté ($BT_{i,j}$) afin de constituer un premier bloc corrigé, et

une série d'étapes conformes à l'une quelconque des revendications 1 à 5 et relatives à chacun des deux demi-segments composant chacun des colonnes ($co_n$), respectivement des lignes, dudit bloc translaté.

7. Dispositif de filtrage d'une image numérique obtenue après codage et décodage par transformation et quantification de blocs de pixels de dimension N x N,

chacun des blocs décodés ($BL_{i,j}$) dans l'image étant constitué de N segments ($LI_1$ à $LI_N$ ou $CO_1$ à $CO_N$) parallèles de pixels ayant des niveaux de luminosité respectifs (NL(A), ..., NL(H)) et étant séparé, en ligne et en colonne, de blocs adjacents ($BL_{i,j-1}$, $BL_{j-1,j}$, $BL_{i,j+1}$ $BL_{i+1,j}$) par des frontières respectives,

chaque demi-segment (A, B, C, D) desdits N segments d'un bloc donné (BL1) étant séparé d'un demi-segment colinéaire correspondant (E, F, G, H) dans l'un des blocs adjacents (BL2) par l'une respective (FR12) des frontières,

caractérisé en ce qu'il comprend :

des moyens d'entrée (10) pour translater les blocs décodés ($BL_{i,j}$) suivant une demi-diagonale des blocs décodés en des blocs translatés ($BT_{i,j}$), lesdits blocs translatés ($BT_{i,j}$) ayant des axes de symétrie horizontaux et verticaux correspondant à des frontières des blocs décodés afin de produire en série les segments ($LI_1$ à $LI_N$) inclus dans chacun des blocs translatés,

des premiers moyens (12) pour évaluer successivement des écarts de discontinuité (ED) relatifs aux demi-segments de chacun des segments de chaque bloc translaté ($BT_{i,j}$), chaque écart de discontinuité (ED) étant égal à la valeur absolue de la différence entre le niveau de luminosité (NL) du pixel (D) dudit chaque demi-segment limitrophe à la frontière et la moyenne arithmétique des niveaux de luminosité des pixels adjacents (C,E) audit pixel limitrophe (D),

des premiers moyens (14, 15, 16) pour déterminer, pour les demi-segments dudit bloc translaté ($BT_{i,j}$), les signes des écarts de discontinuité et des facteurs de correction de discontinuité (FCD), chaque facteur de correction de discontinuité (FCD) étant déterminé en fonction des écarts de discontinuité (ED) et de pas de quantification de blocs décodés, et

des premiers moyens (19a, 17) pour corriger les segments dudit bloc translaté ($BT_{i,j}$) en fonction des facteurs (FCD) et signes déterminés, en des premiers segments corrigés.

8. Dispositif conforme à la revendication 7, caractérisé en ce qu'il comprend

des seconds moyens (18) pour évaluer successivement des écarts de bloc (EB) relatifs aux premiers segments corrigés dudit bloc ($BT_{i,j}$), chaque écart de bloc étant égal à la différence de deux niveaux de luminosité fictifs (NL(X), NL(Y)) évalués pour ledit chaque demi-segment (A, B, C, D) et ledit demi-segment colinéaire correspondant (E, F, G, H) séparés par ladite frontière (FR12), le niveau de luminosité fictif (NL(X)) pour ledit chaque demi-segment étant égal à la somme du niveau corrigé de luminosité (NL(D1)) dudit pixel limitrophe dudit chaque demi-segment et de la demi-différence du niveau de luminosité corrigé dudit pixel limitrophe et d'un niveau de luminosité (NL(C)) d'un pixel (C) dudit demi-segment qui est adjacent audit pixel limitrophe lorsque le niveau corrigé (NL(D1)) dudit pixel limitrophe est supérieur au niveau de luminosité (NL(C)) dudit pixel adjacent (C) audit pixel limitrophe (D1), et égal à la différence dudit niveau corrigé NL(D1) dudit pixel limitrophe et de ladite demi-différence lorsque ledit niveau corrigé dudit pixel limitrophe dudit demi-segment est inférieur audit niveau dudit pixel adjacent audit pixel limitrophe dudit demi-segment, des seconds moyens (14, 15, 16) pour déterminer des facteurs de correction de bloc (FCB) et les signes des écarts de bloc en fonction des écarts de bloc et desdits pas de quantification pour les premiers segments corrigés, et des seconds moyens (19b, 20) pour corriger les premiers segments corrigés en fonction des facteurs de correction de bloc et des signes des écarts de bloc, en des seconds segments corrigés.

9. Dispositif conforme à la revendication 8, caractérisé en ce que les premiers et seconds moyens pour déterminer (14, 15, 16) sont confondus, et en ce que le dispositif de filtrage comprend des premiers moyens (13) pour multiplexer les écarts de discontinuité et les écarts de blocs en des écarts multiplexés (ED, EB) appliqués aux moyens confondus pour déterminer (14, 15, 16) qui transmettent des facteurs de correction de discontinuité et de bloc (FCD, FCB) multipléxés auxdits premiers et seconds moyens pour corriger ( 19a, 17; 19b, 20).

10. Dispositif conforme à l'une quelconque des revendications 7 à 9, caractérisé en ce qu'il comprend un second ensemble de seconds moyens pour évaluer, déterminer et corriger relatifs à des seconds segments constitués par des colonnes, respectivement lignes des blocs translatés, qui est analogue à un premier ensemble incluant lesdits premiers moyens relatifs à des premiers segments constitués par des lignes, respectivement colonnes des blocs translatés et qui opère à la suite du premier ensemble.

11. Dispositif conforme à la revendication 10, caractérisé en ce que les premiers et seconds moyens (12 et/ou 18) pour évaluer des écarts (ED et/ou EB) sont confondus, et les premiers et seconds moyens (14, 15, 16) pour déterminer des facteurs de correction (FCD et/ou FCB) sont confondus, et

le dispositif de filtrage comprend des premiers moyens (21) pour transposer chaque bloc de segments corrigés sortant du premier ensemble, en des blocs transposés, des seconds moyens (11) pour multiplexer les blocs translatés et les blocs transposés en des blocs multiplexés appliqués au second ensemble, et des moyens (23) pour transposer les blocs corrigés produits par le second ensemble.

**Patentansprüche**

1. Verfahren zur Filterung eines digitalen Bildes, erhalten nach Codierung und Decodierung durch Transformation und Quantisierung von Pixel-Blöcken mit Abmessung N x N,

wobei jeder der decodierten Blöcke ($BL_{i,j}$) im Bild aus N parallelen Pixelsegmenten ($LI_I$ bis $LI_N$ oder $CO_1$ bis $CO_N$) besteht, die jeweilige Helligkeitsgrade (NL(A)) und (NL(H)) aufweisen und in der Zeile und in der Spalte von benachbarten Blöcken ($BL_{i,j-1}$, $BL_{i-1,j}$, $BL_{i,j+1}$, $BL_{i+1,j}$) durch entsprechende Grenzen ($FR_{j-1}$, $FR_{i-1}$, $FR_j$, $FR_i$) getrennt sind, wobei das Verfahren durch die folgenden Schritte für jedes Halbsegment (A, B, C, C) der N Segmente eines gegebenen Blocks (BL1) gekennzeichnet ist, der von einem entsprechenden kollinearen Halbsegment (E, F, G, H) in einem der benachbarten Blöcke (BL2) durch die eine entsprechende (FR12) der Grenzen getrennt ist:

- Feststellung einer Diskontinuität im Helligkeitsgrad in bezug auf das Pixel (D) besagten jeden Halbsegments angrenzend an die entsprechende Grenze (FR12), wenn zwei diskrete Helligkeitsgrad-Gradienten, die jeweils von den Helligkeitsgraden der beiden Pixel (C, E) benachbart dem angrenzenden Pixel (D) abhängig sind, entgegengesetzte Vorzeichen aufweisen; und

in Reaktion auf die Feststellung der Diskontinuität im Helligkeitsgrad in bezug auf das angrenzende Pixel (D):

- Abschätzung einer Diskontinuitätsabweichung (ED) gleich dem Absolutwert der Differenz zwischen dem Helligkeitsgrad (NL) des angrenzenden Pixels (D) und dem arithmetischen Mittelwert der Helligkeitsgrade der benachbarten Pixel (C, E); und
- Korrektur des Helligkeitsgrades (NL) des angrenzenden Pixels (D) jeweils zu einem

14

korrigierten Helligkeitsgrad (NL(D1))

durch Subtraktion beim Helligkeitsgrad (NL) des angrenzenden Pixels (D) eines Diskontinuitätskorrekturfaktors (FCD), der von der Diskontinuitätsabweichung (ED) und einem Quantisierschritt (QZ1) abhängig ist, der bei der Codierung und Decodierung durch Transformation des gegebenen Blocks (BL1) verwendet wird, wenn der Helligkeitsgrad (NL) des angrenzenden Pixels (D) größer als der arithmetische Mittelwert ist, und durch Addition des Diskontinuitätskorrekturfaktors (FCD) zum Helligkeitsgrad des angrenzenden Pixels (NL) wenn der Helligkeitsgrad des angrenzenden Pixels (D) kleiner als der arithmetische Mittelwert ist.

2. Verfahren nach Anspruch 1, dadurch **gekennzeichnet**, daß der Diskontinuitätskorrekturfaktor (FCD) eine im wesentlichen trapezförmige Funktion der Diskontinuitätsabweichung (ED) für einen vorbestimmten Quantisierungsschritt (QZ) ist.

3. Verfahren nach Anspruch 1 oder 2, **gekennzeichnet** durch die folgenden Schritte für besagtes jedes Halbsegment (A, B, C, D) im gegebenen Block (BL1) und das entsprechende kollineare Segment (E, F, G, H) des benachbarten Blocks (BL2), die durch die Grenze (FR12) getrennt sind:

- für jedes (A, B, C, D) der Halbsegmente Abschätzung eines fiktiven Helligkeitsgrades (NL(X)) jeweils zur Grenze (FR12)

gleich der Summe des korrigierten Helligkeitsgrades (NL(D1)) des angrenzenden Pixels besagten jeden Halbsegments und der Halbdifferenz des korrigierten Helligkeitsgrades des angrenzenden Pixels und eines Helligkeitsgrades (NL(C)) eines Pixels (C) des Halbsegments, das benachbart dem angrenzenden Pixels ist, wenn der korrigierte Grad (NL(D1)) des angrenzenden Pixel größer als der Helligkeitsgrad (NL(C)) des Pixels benachbart (C) dem angrenzenden Pixel (D1) ist, und gleich der Differenz des korrigierten Grades (NL(D1)) des angrenzenden Pixels und besagter Halbdifferenz, wenn der korrigierte Grad des angrenzenden Pixels des Halbsegments kleiner als der Grad des Pixels benachbart dem angrenzenden Pixel des Halbsegments ist;

- Abschätzung einer Blockabweichung (EB) gleich der Differenz der beiden fiktiven Helligkeitsgrade (NL(X)), (NL(Y)), die für jedes Halbsegment ausgewertet worden sind, und dem entsprechenden Halbsegment;
- Bestimmung eines Blockkorrekturfaktors (FCB) abhängig von der Blockabweichung (EB) und dem Quantisierungsschritt (QZ1, QZ2), die bei der Codierung und Decodierung durch Transformation jeweils des gegebenen Blocks und des benachbarten Blocks (BL1, BL2) verwendet werden; und
- Korrektur der Helligkeitsgrade der Pixel jeweils besagten jeden Halbsegments und des entsprechenden Halbsegments

durch Subtraktion des Blockkorrekturfaktors (FCB), gewichtet jeweils mit abnehmenden Koeffizienten im Verhältnis zu den Entfernungen der Pixel von der Grenze zwischen besagten jeden Halbsegment und dem entsprechenden Halbsegment, wenn der fiktive Helligkeitsgrad (NL(X)) bezüglich besagten jeden Halbsegment größer als der fiktive Helligkeitsgrad (NL(X)) bezüglich des entsprechenden Halbsegments größer ist, und durch Addition des Blockkorrekturfaktors (FCB), gewichtet durch die Koeffizienten, wenn der fiktive Helligkeitsgrad bezüglich besagten jeden Halbsegments kleiner als der fiktive Helligkeitsgrad bezüglich des entsprechenden Halbsegments ist.

4. Verfahren nach Anspruch 3, dadurch **gekennzeichnet**, daß die ganze Zahl N gleich acht ist und die Koeffizienten 7/16, 5/16, 3/16 und 1/16 sind.

5. Verfahren nach einem beliebigen der Ansprüche 1 bis 4, dadurch **gekennzeichnet**, daß die Segmente Pixelzeilen oder -spalten in den Blöcken sind.

6. Verfahren zur Filterung eines digitalen Bildes, dadurch **gekennzeichnet**, daß es umfaßt

vor Umsetzung jedes der Segmentblöcke $(BL_{i,j})$ des Bildes zu einem umgesetzten Block $(BT_{i,j})$ folgend einer Halbdiagonale (FT) des Blocks, dann eine Folge von Schritten nach einem der beliebigen der Ansprüche 1 bis 5 und bezüglich jedes der zwei Halbsegmente, die jeweils Zeilen $(LI_n)$ bzw. Spalten des umgesetzten Blocks $(BT_{i,j})$ darstellen, um einen ersten korrigierten Block zu bilden, und eine Folge von Schritten nach einem beliebigen der Ansprüche 1 bis 5 und bezüglich jedes der beiden Halbsegmente, die jeweils Spalten $(Co_n)$ bzw. Zeilen des umgesetzten Blocks darstellen.

**7.** Vorrichtung zur Filterung eines digitalen Bildes, erhalten nach Codierung und Decodierung durch Transformation und Quantisierung von Pixelblöcken mit Abmessung N x N,

wobei jeder der decodierten Blöcke $(BL_{i,j})$ im Bild aus N parallelen Pixelsegmenten $(LI_1$ bis $LI_N$ oder $CO_1$ bis $CO_N)$ besteht, die entsprechende Helligkeitsgrade $(NL(A)),..., (NL(H))$ aufweisen und in der Zeile und in der Spalte von benachbarten Blöcken $(BL_{i,j-1},$ $BL_{j-1,j},$ $BL_{i,j+1},$ $BL_{i+1,j})$ durch entsprechende Grenzen getrennt sind,
wobei jedes Halbsegment (A, B, C, D) der N Segmente eines gegebenen Blocks (BL1) von einem entsprechenden kollinearen Halbsegment (E, F, G, H) in einem der benachbarten Blöcke (BL2) durch eine entsprechende (FR12) der Grenzen getrennt ist,

dadurch **gekennzeichnet**, daß sie umfaßt:

Eingangsmittel (10) zum Umsetzen der decodierten Blöcke $(BL_{i,j})$ folgend einer Halbdiagonale der decodierten Blöcke in umgesetzte Blöcke $(BT_{i,j})$, wobei die umgesetzten Blöcke $(BT_{i,j})$ horizontale und vertikale Symmetrieachsen entsprechend Grenzen der decodierten Blöcke aufweisen, um in Folge Segmente $(LI_1$ bis $LI_N)$ zu erzeugen, die in jedem der umgesetzten Blöcke enthalten sind,
erste Mittel (12) zum aufeinanderfolgenden Abschätzen der Diskontinuitätsabweichungen (ED) bezüglich der Halbsegmente jeweils der Segmente jedes umgesetzten Blocks $(BT_{i,j})$, wobei jede Diskontinuitätsabweichung (ED) gleich dem Absolutwert der Differenz zwischen dem Helligkeitsgrad (NL) des Pixels (D) besagten jeden Halbsegments angrenzend an die Grenze und dem arithmetischen Mittelwert der Helligkeitsgrade der benachbarten Pixel (C, E) des angrenzenden Pixel (D) ist,
erste Mittel (14, 15, 16) zum Bestimmen der Vorzeichen der Diskontinuitätsabweichungen und der Diskontinuitätskorrekturfaktoren (FCD) für die Halbsegmente des umgesetzten Blocks $(BT_{i,j})$, wobei jeder Diskontinuitätskorrekturfaktor (FCD) abhängig von Diskontinuitätsabweichungen (ED) und von Quantisierungsschritten von decodierten Blöcken bestimmt wird, und
erste Mittel (19a, 17) zum Korrigieren der Segmente des umgesetzten Blocks $(BT_{i,j})$ abhängig von Faktoren (FCD) und bestimmten Vorzeichen zu ersten korrigierten Segmenten.

**8.** Vorrichtung nach Anspruch 7, dadurch **gekenn-**

**zeichnet**, daß sie umfaßt

zweite Mittel (18) zum nacheinander folgenden Abschätzen der Blockabweichungen (EB) bezüglich der ersten korrigierten Segmente des Blocks $(BT_{i,j})$, wobei jede Blockabweichung gleich der Differenz von zwei fiktiven Helligkeitsgraden (NL(X), NL(Y)) ist, abgeschätzt für besagtes jedes Halbsegment (A, B, C, D) und das entsprechende kollineare Halbsegment (E, F, G, H), die durch die Grenze (FR12) getrennt sind, wobei der fiktive Helligkeitsgrad (NL(X)) für besagtes jedes Halbsegment ist,
gleich der Summe des hellikeitskorrigierten Grades (NL(D1)) des angrenzenden Pixels besagten jeden Halbsegments und der Halbdifferenz des korrigierten Helligkeitsgrades des angrenzenden Pixels und eines Helligkeitsgrades (NL(C)) eines Pixels (C) des Halbsegments ist, das benachbart dem angrenzenden Pixel ist, wenn der korrigierte Grad (NL(D1)) des angrenzenden Pixels größer als der Helligkeitsgrad (NL(C)) des Pixels (C) benachbart dem angrenzenden Pixel (D1) ist, und
gleich der Differenz des korrigierten Grades (NL(D1)) des angrenzenden Pixels und der Halbdifferenz, wenn der korrigierte Grad des angrenzenden Pixels des Halbsegments kleiner als der Grad des Pixels benachbart dem angrenzenden Pixel des Halbsegments ist,
zweite Mittel (14, 15, 16) zum Bestimmen der Blockkorrekturfaktoren (FCB) und der Vorzeichen der Blockabweichungen abhängig von Blockabweichungen und den Quantisierungsschritten für die ersten korrigierten Segmente und
zweite Mittel (19b, 20) zum Korrigieren der ersten korrigierten Segmente abhängig von Blockkorrekturfaktoren und den Vorzeichen der Blockabweichungen zu zweiten korrigierten Segmenten.

**9.** Vorrichtung nach Anspruch 8, dadurch **gekennzeichnet**, daß die ersten und zweiten Mittel zu Bestimmen (14, 15, 16) vereinigt sind und daß die Filtervorrichtung erste Mittel (13) zum Multiplexen der Diskontinuitätsabweichungen und der Blockabweichungen zu gemuliplexten Abweichungen (ED, EB) umfaßt, die auf die vereinigten Mittel zum Bestimmen (14, 15, 16) angewendet werden, die Diskontinuitäts- und Blockkorrekturfaktoren (FCD, FCB) übertragen, die mit den ersten und zweiten Mitteln zum Korrigieren (19a, 17; 19b, 20) gemultiplext sind.

**10.** Vorrichtung nach einem beliebigen der Ansprüche 7 bis 9, dadurch **gekennzeichnet**, daß sie eine zweite Gruppe von zweiten Mitteln zum Abschätzen, Bestimmen und Korrigieren bezüglich zweiter Segmente umfaßt, die aus Spalten bzw. Zeilen der umgesetzten Blöcke bestehen, die analog zu einer ersten Gruppe ist, die die ersten Mittel bezüglich der ersten Segmente enthält, bestehend aus Zeilen bzw. Spalten der umgesetzten Blöcke und die nach der ersten Gruppe wirksam ist.

11. Vorrichtung nach Anspruch 10, dadurch **gekennzeichnet**, daß die ersten und zweiten Mittel (12 und/oder 18) zum Abschätzen der Abweichungen (ED und/oder EB) vereinigt sind und die ersten und zweiten Mittel (14, 15, 16) zum Bestimmen der Korrekturfaktoren (FCD und/oder FCB) vereinigt sind und

die Filtervorrichtung erste Mittel (21) zum Umlagern jedes Blocks korrigierter Segmente, die aus der ersten Gruppe austreten zu umgelagerten Blöcken, zweite Mittel (11) zum Multiplexen der umgesetzten Blöcke und der umgelagerten Blöcke zu gemultiplexten Blöcken, die auf die zweite Grupe gegeben werden, und Mittel (23) umfaßt, um die durch die zweite Gruppe erzeugten korrigierten Blöcke umzulagern.

## Claims

1. Method for filtering a digital image obtained after encoding and decoding by transformation and quantization of pixel blocks of dimension N x N,

    each of decoded blocks $(BL_{i,j})$ in the image being constituted of N parallel segments $(LI_1$ to $LI_N$, or $CO_1$ to $CO_N)$ of pixels having respective brightness levels (NL(A) and NL(H)) and being separated, in line and column, from adjacent blocks $(BL_{i,j-1}, BL_{i-1,j}, BL_{i,j+1}, BL_{i+1,j})$ by respective boundaries $(FR_{j-1}, FR_{i-1}, FR_j, FR_i)$, the method being characterized by the following steps for each half-segment (A, B, C, D) of said N segments in a given block (BL1) separated from a corresponding colinear half-segment (E, F, G, H) in one of the adjacent blocks (BL2) by respective one (FR12) of the boundaries :

    - detecting discontinuity in brightness level with respect to the pixel (D) of said each half-segment bordering on said respective boundary (FR12) when two discrete gradients of brightness level depending respectively on the brightness levels of the two pixels (C, E) adjacent to said bordering pixel (D) have opposite signs; and

    in response to the detection of said brightness level discontinuity with respect to said bordering pixel (D) :

    - evaluating a discontinuity divergence (ED) equal to the absolute value of the difference between the brightness level (NL) of the bordering pixel (D) and the arithmetical average of the brightness levels of the adjacent pixels (C,E) ; and
    - correcting the brightness level (NL) of the bordering pixel (D) into a corrected brightness level (NL(D1)) respectively

        by subtracting from said brightness level (NL) of the bordering pixel (D) a discontinuity correction factor (FCD) depending on said discontinuity divergence (ED) and on a quantization pitch (QZ1) used in the encoding and decoding by transformation of said given block (BL1), when said brightness level (NL) of the bordering pixel (D) is more than said arithmetical average, and by adding said discontinuity correction factor (FCD) to said brightness level of the bordering pixel (NL) when said brightness level of the bordering pixel (D) is less than said arithmetical average.

2. Method according to claim 1, characterized in that the discontinuity correction factor (FCD) is a substantially trapezoid function of said discontinuity divergence (ED), for a predetermined quantization pitch (QZ).

3. Method according to claim 1 or 2, characterized by the following steps for said each half-segment (A, B, C, D) in said given block (BL1) and said corresponding colinear segment (E, F, G, H) of the adjacent block (BL2) separated by said boundary (FR12) :

    - for each (A, B, C, D) of the half-segments, evaluating a dummy brightness level (NL(X)) at said boundary (FR12) respectively

        equal to the sum of the corrected brightness level (NL(D1)) of said bordering pixel of said each half-segment and of the half-difference of the corrected brightness level of said bordering pixel and a brightness level (NL(C)) of a pixel (C) of said half-segment which is adjacent to said bordering pixel when the corrected level (NL(D1)) of said bordering pixel is more than the brightness level (NL(C)) of said pixel (C) adjacent to said bordering pixel (D1), and

equal to the difference of said corrected level NL(D1) of said bordering pixel and of said half-difference when said corrected level of said bordering pixel of said half-segment is less than said level of said pixel adjacent to said bordering pixel of said half-segment ;

- evaluating a block divergence (EB) equal to the difference between the two dummy brightness levels (NL(X), NL(Y)) evaluated for said each half-segment and said corresponding half-segment ;
- determinating a block correction factor (FCB) as a function of said block divergence (EB) and of quantization pitches (QZ1, QZ2) used in the encoding and decoding by transformation of said given block and adjacent block (BL1, BL2) respectively ; and
- correcting the brightness levels of the pixels of said each half-segment and said corresponding half-segment respectively

  by subtracting the block correction factor (FCB) weighted by decreasing coefficients respectively in proportion to the distances between said pixels and the boundary between said each half-segment and said corresponding half-segment, when the dummy brightness level (NL(X)) relating to said each half-segment is more than the dummy brightness level (NL(X)) relating to said corresponding half-segment, and
  by adding the block correction factor (FCB) weighted by said coefficients when the dummy brightness level relating to said each half-segment is less than the dummy brightness level relating to said corresponding half-segment.

4. Method according to claim 3, characterized in that the integer N is equal to eight and the coefficients are 7/16, 5/16, 3/16 and 1/16.

5. Method according to any one of claims 1 to 4, characterized in that the segments are either lines or columns of pixels in the blocks.

6. Method for filtering a digitalized image, characterized in that it comprises

   beforehand, a translation of each of the blocks of segments $(BL_{i,j})$ of the image into a block translated $(BT_{i,j})$ according to a half-diagonal (FT) of said block, then a series of steps according to any one of claims 1 to 5 and relating to each of the two half-segments each formed with lines $(LI_n)$, respectively columns, of said translated block $(BT_{i,j})$ thereby constituting a first corrected block, and
   a series of steps according to any one of claims 1 to 5 and relating to each of the two half-segments each formed with columns $(CO_n)$, respectively lines, of said translated block.

7. Device for filtering a digital image obtained after encoding and decoding by transformation and quantization of pixel blocks of dimension N x N,

   each of the decoded blocks $(BL_{i,j})$ in the image being constituted of N parallel segments $(LI_1$ to $LI_N$ or $CO_1$ to $CO_N)$ of pixels having respective brightness levels (NL(A), ..., NL(H)) and being separated, in line and column, from adjacent blocks $(BL_{i,j-1}, BL_{j-1,j}, BL_{i,j+1}, BL_{i+1,j})$ by respective boundaries,
   each half-segment (A, B, C, D) of said N segments of a given block (BL1) being separated from a corresponding colinear half-segment (E, F, G, H) in one of the adjacent blocks (BL2) by respective one (FR12) of the boundaries,

   characterized in that it comprises :

   input means (10) for translating the decoded blocks $(BL_{i,j})$ according to a half-diagonal of the decoded blocks into translated blocks $(BT_{i,j})$, said translated blocks $(BT_{i,j})$ having horizontal and vertical axes of symmetry corresponding to boundaries of the decoded blocks thereby producing in series the segments $(LI_1$ to $LI_N)$ included in each of the translated blocks,
   first means (12) for successively evaluating discontinuity divergences (ED) relating to the half-segments of each of the segments of each translated block $(BT_{i,j})$, each discontinuity divergence (ED) being equal to the absolute value of the difference between the brightness level (NL) of the pixel (D) of said each half-segment bordering on the boundary and the arithmetical average of the brightness levels of the pixels adjacent (C, E) to said bordering pixel (D),
   first means (14, 15, 16) for determining, for the half-segments of said translated block $(BT_{i,j})$, the signs of the discontinuity divergences and discontinuity correction factors (FCD), each discontinuity correction factor (FCD) being determined as a function of the discontinuity divergences (ED) and of decoded blocks quantization pitches, and
   first means (19a, 17) for correcting the segments of said translated block $(BT_{i,j})$ as a function of the determined factors (FCD) and signs, into first corrected segments.

8. Device according to claim 7, characterized in that it comprises

second means (18) for successively evaluating block divergences (EB) relating to the first corrected segments of said block $(BT_{i,j})$, each block divergence being equal to the difference of two dummy brightness levels (NL(X)(Y)) evaluated for said each half-segment (A, B, C, D) and said corresponding colinear half-segment (E, F, G, H) separated by said boundary (FR12), the dummy brightness level (NL(X)) for said each half-segment being

equal to the sum of the corrected brightness level (NL(D1)) of said bordering pixel of said each half-segment and of the half-difference of the corrected brightness level of said bordering pixel and of a brightness level (NL(C)) of a pixel (C) of said half-segment which is adjacent to said bordering pixel, when the corrected level (NL(D1)) of said bordering pixel is more than the brightness level (NL(C)) of said pixel (C) adjacent to said bordering pixel (D1), and

equal to the difference of said corrected level (NL(D1)) of said bordering pixel and of said half-difference when said corrected level of said bordering pixel of said half-segment is less than said level of said pixel adjacent to said bordering pixel of said half-segment,

second means (14, 15, 16) for determining block correction factors (FCB) and the signs of the block divergences as a function of the block divergences and of said quantization pitches for the first corrected segments, and

second means (19b, 20) for correcting the first corrected segments as a function of the block correction factors and of the signs of the block divergences, into second corrected segments.

9. Device according to claim 8, characterized in that the first and second determining means (14, 15, 16) are merged, and in that the filtering device comprises first means (13) for multiplexing the discontinuity divergences and the block divergences into multiplexed divergences (ED, EB) applied to the merged determining means (14, 15, 16) which transmit multiplexed discontinuity and block correction factors (FCD, FCB) to said first and second correcting means (19a, 17 ; 19b, 20).

10. Device according to any one of claims 7 to 9, characterized in that it comprises a second set of second evaluating, determining and correcting means relating to second segments constituted by columns, respectively lines of the translated blocks, which is analogous to a first set including said first means relating to first segments constituted by lines, respectively columns of the translated blocks and which operates subsequent to the first set.

11. Device according to claim 10, characterized in that the first and second means (12 and/or 18) for evaluating divergences (ED and/or EB) are merged, and the first and second means (14, 15, 16) for determining correction factors (FCD and/or FCB) are merged, and

the filtering device comprises first means (21) for transposing each block of corrected segments coming from the first set, into transposed blocks, second means (11) for multiplexing the translated blocks and the transposed blocks into multiplexed blocks applied to the second set, and means (23) for transposing the corrected blocks produced by the second set.

## *FIG.1A*

FRONTIERE

CF

BL1

LO

BL2

IMAGE A
TRANSMETTRE

CODAGE + TRANSMISSION +
DECODAGE

## *FIG.1B*

BL1

CF

BL2

LO

IMAGE
RECONSTITUEE

# FIG.2

CAMERA — 1

IMAGE

CONVERTISSEUR A/N — 2

CODEUR PAR TRANSFORMEE — 3

LT

LIGNE DE TRANSMISSION (DEBIT LIMITE)

DECODEUR PAR TRANSFORMEE — 4

DISPOSITIF DE FILTRAGE — 5

CONVERTISSEUR N/A — 6

MONITEUR DE TELEVISION — 7

# FIG.3

IMAGE (NIxNJ)pixels

bloc de $N^2$ pixels

frontière

EP 0 566 202 B1

FIG.4

FIG.5

FIG.6

*FIG.7*

*FIG.8*

FIG.9